# EUROPÄISCHE PATENTSCHRIFT

(11) **EP 2 379 894 B1**
(45) Veröffentlichungstag und Bekanntmachung des Hinweises auf die Patenterteilung: **18.12.2013**
(21) Anmeldenummer: 10701471.4
(22) Anmeldetag: 22.01.2010
(51) Int. Cl.: F15B 21/04

(54) **VORRICHTUNG ZUR REDUZIERUNG VON DRUCKPULSATIONEN**
DEVICE FOR REDUCING PRESSURE PULSATIONS
DISPOSITIF DE REDUCTION DES IMPULSIONS DE PRESSION

(30) Priorität: 22.01.2009 DE 102009005830
(43) Veröffentlichungstag der Anmeldung: 26.10.2011
(60) Teilanmeldung: 12001043.4
(73) Patentinhaber: FTE automotive GmbH, 96106 Ebern (DE)
(72) Erfinder: GEBERT, Stefan, 96242 Sonnefeld (DE); MACHT, Egid, 81247 München (DE); MARKS, Paul, 96106 Ebern (DE); MÜLLER, Robert, 96126 Maroldsweisach (DE); RYBA, Jürgen, 96182 Reckendorf (DE); SCHNEIER, Jochen, 96199 Zapfendorf (DE); WEIBELZAHL, Wilfried, 96271 Grub (DE)
(74) Vertreter: Oppermann, Mark
(86) Internationale Anmeldenummer: PCT/EP2010/000376
(87) Internationale Veröffentlichungsnummer: WO 2010/084008

(56) Entgegenhaltungen:
- DE-A1- 3 631 507
- DE-A1- 4 003 521
- DE-A1- 10 006 542
- DE-A1- 10 015 051
- DE-A1- 10 351 907
- DE-C1- 10 112 674
- DE-C1- 19 540 753

## Beschreibung

### TECHNISCHES GEBIET

Die vorliegende Erfindung bezieht sich auf eine zwischen einen Druckraum eines Nehmerzylinders und einen Druckraum eines Geberzylinders eines hydraulischen Kraftübertragungssystems schaltbare, für das Druckmittel stets offene Vorrichtung zur Reduzierung von Druckpulsationen, gemäß dem Oberbegriff des Patentanspruchs 1. Insbesondere bezieht sich die Erfindung auf solche Vorrichtungen zur Reduzierung von Druckpulsationen, wie sie massenweise in hydraulischen Kupplungsbetätigungen für Kraftfahrzeuge zum Einsatz kommen.

### STAND DER TECHNIK

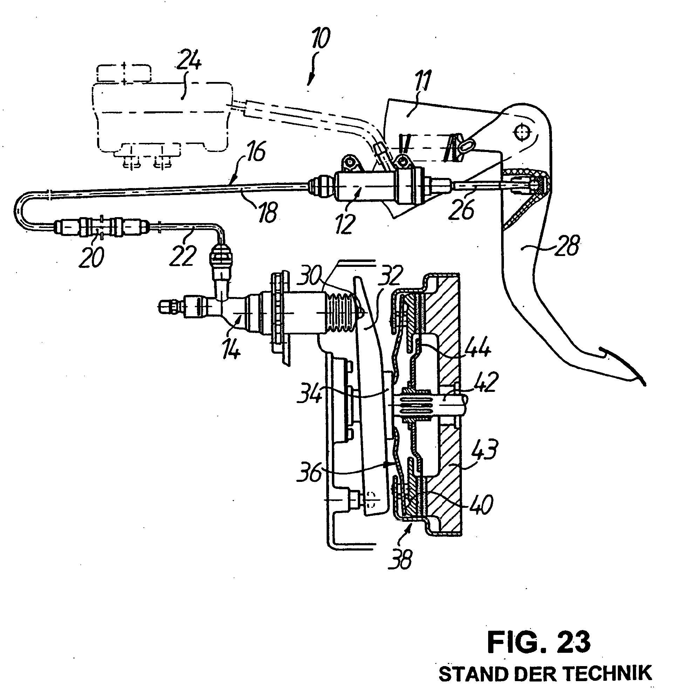

Die Fig. 23 zeigt eine herkömmliche hydraulische Kupplungsbetätigung 10 für Kraftfahrzeuge in einer vereinfachten Darstellung. Die hydraulische Kupplungsbetätigung 10 weist einen an einem Pedalbock 11 des Kraftfahrzeugs montierten Geberzylinder 12 und einen getriebenah im Kraftfahrzeug befestigten Nehmerzylinder 14 auf, die über eine Hydraulikleitung 16 hydraulisch miteinander verbunden sind, welche hier ausgehend vom Geberzylinder 12 aus einem ersten Rohrabschnitt 18, einem Schlauchabschnitt 20 und einem zweiten Rohrabschnitt 22 besteht. Der nicht dargestellte Kolben des hydraulisch an einen Ausgleichsbehälter 24 angeschlossenen Geberzylinders 12 ist über eine Kolbenstange 26 mit einem Kupplungspedal 28 wirkverbunden, so dass der Geberzylinder 12 durch Niedertreten des Kupplungspedals 28 betätigt werden kann, was eine Verschiebung des Kolbens im Geberzylinder 12 bewirkt. Hierbei wird in Richtung des Nehmerzylinders 14 eine Flüssigkeitssäule durch die Hydraulikleitung 16 hindurchgeschoben, die den Nehmerzylinder 14 hydraulisch beaufschlagt.

Der Nehmerzylinder 14, genauer dessen hier nicht gezeigter Kolben steht vermittels einer Kolbenstange 30 über einen Ausrückhebel 32 und ein Ausrücklager 34 mit einem Ausrückmechanismus 36 einer Reibungskupplung 38 in Wirkverbindung. Wird der Nehmerzylinder 14 zum Ausrücken der Reibungskupplung 38 hydraulisch beaufschlagt, so wird vermittels des Ausrückmechanismus 36 eine Kupplungsdruckplatte 40 von einer auf einer Getriebewelle 42 sitzenden, mit einer von der Kurbelwelle des Verbrennungsmotors (nicht dargestellt) getragenen Schwungscheibe 43 zusammenwirkenden Kupplungsmitnehmerscheibe 44 der Reibungskupplung 38 getrennt, und somit auch der Verbrennungsmotor vom Getriebe (ebenfalls nicht näher gezeigt) des Kraftfahrzeugs.

Wird das Kupplungspedal 28 entlastet, um die Reibungskupplung 38 wieder einzurücken, wird der Nehmerzylinder 14, genauer dessen Kolben infolge u.a. der Federkräfte der Reibungskupplung 38 wieder in seine Grund- bzw. Ausgangsstellung zurückgebracht, wobei die oben erwähnte Flüssigkeitssäule durch die Hydraulikleitung 16 hindurch wieder zurück in Richtung des Geberzylinders 12 geschoben wird.

Bei einer solchen hydraulischen Kupplungsbetätigung 10 - die als quasi-stationäres hydraulisches Kraftübertragungssystem zu betrachten ist, bei dem keine kontinuierliche Strömung der Hydraulikflüssigkeit vorliegt - werden Schwingungen vom Verbrennungsmotor, insbesondere dessen Kurbelwelle über die Bauteile der Reibungskupplung 38, das Ausrücklager 34, den Ausrückhebel 32 und den Nehmerzylinder 14 in die sich in der Hydraulikleitung 16 befindende Flüssigkeitssäule zwischen Nehmerzylinder 14 und Geberzylinder 12 übertragen, in der sie sich als Druckpulsationen fortpflanzen. Es wurde bereits als nachteilig empfunden, dass diese Druckpulsationen vom Fahrer am Kupplungspedal 28 als Vibrationen insbesondere dann zu spüren sind, wenn der Fuß auf dem Kupplungspedal 28 in typisch städtischer Fahrweise abgestützt wird - sogenanntes "Anlegekribbeln" - oder das durchgetretene Kupplungspedal 28 z.B. während eines Stopps vor einer Ampel gehalten wird.

So fehlt es denn im Stand der Technik nicht an Vorschlägen, wie dieser Problematik zu begegnen ist (z.B. DE 36 31 507 C2 "Quadratwendel", DE 40 03 521 C2 "Doppelleitung mit unterschiedlich langen Leitungszweigen", DE 195 40 753 C1 "Zusatzschwinger", DE 101 12 674 C1 "Membrandämpferdose", DE 100 06 542 A1 oder DE 103 51 907 A1 "Dämpfungsvorrichtung mit Labyrinthkörper"). Diesen Vorschlägen ist gemein, dass in die oder parallel zur Hydraulikleitung zwischen Geberzylinder und Nehmerzylinder eine separate, die Flüssigkeitssäule zwischen Geberzylinder und Nehmerzylinder nicht unterbrechende Baugruppe zur Schwingungsdämpfung eingesetzt bzw. angeordnet wird, welche die Druckpulsationen im Allgemeinen auch zufriedenstellend zu dämpfen vermag. Allerdings nehmen die vorbekannten Lösungen z.T. relativ viel Bauraum in Anspruch, der im Motorraum des Kraftfahrzeugs nicht immer in ausreichendem Maße zur Verfügung steht, und/oder bedingen einen verhältnismäßig komplexen und dementsprechend teuren Aufbau der Vorrichtung, wie er für die Massenfertigung unerwünscht ist.

Nicht näher betrachtet werden sollen in diesem Zusammenhang zwischen Geberzylinder und Nehmerzylinder geschaltete "doppeltwirkende" Ventilmechanismen (z.B. JP 59-89833 A, EP 1 719 921 A2), die bei jeder Verschiebung der Flüssigkeitssäule, d.h. sowohl bei einer Verschiebung in Richtung Nehmerzylinder als auch bei einer Verschiebung in Richtung Geberzylinder öffnen, und bei unbewegter Flüssigkeitssäule schließen, um den Geberzylinder vom Nehmerzylinder abzuschotten bzw. schwingungsmäßig zu entkoppeln, nachdem diese Ventilmechanismen (a) in der Regel noch ungleich aufwendiger ausgebildet sind als stets "druckmitteloffene" Dämpfungsvorrichtungen, die federvorgespannter Ventilkörper od.dgl. nicht bedürfen, (b) bestimmte Öffnungs- und Schließdrücke bedingen, welche in oft unerwünschter Weise die Rücklaufzeiten und die Systemhysterese erhöhen, und schließlich (c) mit Bypässen versehen anfälliger für Verschmutzungen und damit einhergehender Leistungseinbußen sind.

### AUFGABENSTELLUNG

Der Erfindung liegt die Aufgabe zugrunde, ausgehend von der den Oberbegriff des Patentanspruchs 1 bildenden DE 36 31 507 C2 eine zwischen einen Druckraum eines Nehmerzylinders und einen Druckraum eines Geberzylinders eines hydraulischen Kraftübertragungssystems, insbesondere einer hydraulischen Kupplungsbetätigung für Kraftfahrzeuge schaltbare, für das Druckmittel stets offene Vorrichtung zur Reduzierung von Druckpulsationen bereitzustellen, die bei möglichst guten Schwingungsdämpfungseigenschaften verglichen zum Stand der Technik kompakter baut und einen kostengünstigen Aufbau besitzt.

### DARSTELLUNG DER ERFINDUNG

Diese Aufgabe wird durch die im Patentanspruch 1 angegebenen Merkmale gelöst. Vorteilhafte oder zweckmäßige Weiterbildungen der Erfindung sind Gegenstand der Patentansprüche 2 bis 27.

Gemäß der Erfindung umfasst eine zwischen einen Druckraum eines Nehmerzylinders und einen Druckraum eines Geberzylinders eines hydraulischen Kraftübertragungssystems, insbesondere einer hydraulischen Kupplungsbetätigung für Kraftfahrzeuge schaltbare, für das Druckmittel stets offene Vorrichtung zur Reduzierung von Druckpulsationen in Kombination eine Leitungszusatzstrecke in Form eines einen Wendelabschnitt aufweisenden Kanals, der eine nehmerzylinderseitige Öffnung, eine geberzylinderseitige Öffnung und eine Kanallänge aufweist, die ein Mehrfaches des direkten Abstands zwischen den beiden Öffnungen beträgt, und einen Volumenaufnehmer, der unter Druck elastisch verformbar ist, wobei der Kanal und der Volumenaufnehmer derart in einem Gehäuse zu einer Baugruppe zusammengefasst sind, dass der Wendelabschnitt, der schraubengewindeartig verläuft, und der Volumenaufnehmer im Gehäuse in einer einander im Wesentlichen umgebenden, koaxialen Lagebeziehung zueinander angeordnet sind.

Untersuchungen der Anmelderin haben zunächst zu dem überraschenden Ergebnis geführt, dass die vorbeschriebenen zwei Maßnahmen zur Schwingungsdämpfung - nämlich Leitungszusatzstrecke in Form eines Kanals einerseits und Volumenaufnehmer andererseits - in Kombination Druckpulsationen in einem Maße zu verringern vermögen, das weit über den Schwingungsdämpfungseffekt der jeweiligen Einzelmaßnahme hinausgeht, so dass die Schwingungsdämpfungseigenschaften der erfindungsgemäßen Vorrichtung als sehr gut bezeichnet werden können. Da darüber hinaus der Kanal und der Volumenaufnehmer in ein und demselben Gehäuse zu einer Baugruppe zusammengefasst sind, wobei zudem die Kanallänge ein Mehrfaches des direkten Abstands zwischen den beiden Kanalöffnungen beträgt, baut die erfindungsgemäße Vorrichtung zum einen sehr kompakt, zum anderen können der Kanal und der Volumenaufnehmer mit sehr geringem Abdicht- und Verbindungsaufwand, also sehr kostengünstig fluidverbunden werden. Ein weiterer Vorteil der erfindungsgemäßen Vorrichtung besteht darin, dass beim Einsatz der Vorrichtung in einer - ansonsten herkömmlichen - hydraulischen Kupplungsbetätigung gemäß Fig. 23 der nehmerzylindernahe, zweite Rohrabschnitt der Hydraulikleitung, der in der Regel zur Schwingungsreduktion mit einem gegenüber dem ersten Rohrabschnitt verengten Querschnitt ausgeführt wurde, entfallen kann, d.h. der Schlauchabschnitt der Hydraulikleitung kann nunmehr unmittelbar an den Druckanschluss des Nehmerzylinders angeschlossen werden, wobei quasi der zweite Rohrabschnitt gemäß Fig. 23 auf einfache und sehr platzsparende Weise in der erfindungsgemäßen Vorrichtung integriert ist. Ferner ist es unter fertigungstechnischen Gesichtspunkten von Vorteil, dass der Wendelabschnitt schraubengewindeartig verläuft. Da schließlich der Wendelabschnitt und der Volumenaufnehmer im Gehäuse in einer einander im Wesentlichen umgebenden, koaxialen Lagebeziehung zueinander angeordnet sind, baut die Vorrichtung besonders kurz und kompakt. Hierbei kann der Wendelabschnitt des Kanals den Volumenaufnehmer wenigstens teilweise koaxial umgeben. Alternativ hierzu kann aber auch der Volumenaufnehmer den Wendelabschnitt des Kanals wenigstens teilweise koaxial umgeben.

Als besonders schwingungsdämpfend bzw. -reduzierend wirksam hat es sich erwiesen, wenn der Volumenaufnehmer dem die Leitungszusatzstrecke bildenden Kanal in einer Richtung vom Nehmerzylinder aus zum Geberzylinder hin gesehen hydraulisch vorgeschaltet ist, so dass die sich vom Druckraum des Nehmerzylinders weiter fortpflanzende Druckpulsation nicht erst durch die Leitungszusatzstrecke hindurch laufen muss, um den Volumenaufnehmer zu erreichen.

In besonders kostengünstiger Ausgestaltung der erfindungsgemäßen Vorrichtung kann in das Gehäuse ein Einsatzteil eingesetzt sein, welches zumindest teilweise zusammen mit dem Gehäuse den Kanal begrenzt, was auch die Montage der Vorrichtung einfach gestaltet.

Hierbei kann der Wendelabschnitt des Kanals am Außenumfang des Einsatzteils als Nut ausgebildet sein, die nach radial außen von einer Innenumfangsfläche des Gehäuses abgedeckt ist, was zum einen besonders einfach und kostengünstig herstellbar ist-beispielsweise durch Spitzgießen des Einsatzteils, dessen nach radial außen offene Nut dann erst beim Fügen des Einsatzteils in das Gehäuse durch die dort ohnehin vorhandene Gehäusewandung auf denkbar einfache Weise zum Kanal "komplettiert" wird, und zwar ohne die Verwendung von Dichtelementen od.dgl. - und zum anderen eine Umlenkung der Flüssigkeitssäule bewirkt, die sich im Hinblick auf eine gute Schwingungsdämpfung bei möglichst geringem Durchflusswiderstand als vorteilhaft erwiesen hat. Auch kann der Wendelabschnitt eine Wendelumkehr aufweisen, die den Wendelabschnitt in einen rechtsgewindeartig verlaufenden Unterabschnitt und einen linksgewindeartig verlaufenden Unterabschnitt unterteilt, wodurch insbesondere der axiale Bauraumbedarf für den Wendelabschnitt reduziert wird.

In einer fertigungstechnisch besonders einfachen, kompakten Ausgestaltung kann das Einsatzteil im Wesentlichen topfförmig ausgebildet sein, mit einem Mantelabschnitt und einem Boden. Zweckmäßig kann hierbei der am Außenumfang des Mantelabschnitts des Einsatzteils ausgebildete Wendelabschnitt des Kanals über einen im Boden des Einsatzteils verlaufenden Verbindungsabschnitt des Kanals mit der geberzylinderseitigen Öffnung des Kanals kommunizieren.

Vorzugsweise ist der Volumenaufnehmer am Innenumfang des Mantelabschnitts des Einsatzteils montiert, was einerseits einer kompakten Bauform der Vorrichtung förderlich ist und andererseits eine einfache Steckmontage des Volumenaufnehmers ermöglicht. Es ist weiterhin bevorzugt, wenn es sich bei dem Volumenaufnehmer um ein gummielastisches, spulenförmiges Element handelt, mit einer Durchgangsbohrung und einer außenumfangsseitigen Ringaussparung, die zusammen mit dem Innenumfang des Mantelabschnitts des Einsatzteils eine ringförmige Luftkammer begrenzt. Bei einer solchen Ausgestaltung des Volumenaufnehmers wird, wenn eine Druckamplitude in die Durchgangsbohrung hineinläuft, das spulenförmige Element gegen die Federwirkung des gummielastischen Materials verformt, wobei das Luftvolumen in der ringförmigen Luftkammer komprimiert wird, so dass das spulenförmige Element - wie der Begriff "Volumenaufnehmer" schon impliziert - im Bereich der Durchgangsbohrung eine definierte Aufweitung erfährt, die zu einer gewissen "Entlastung" der Druckamplitude führt. Hierbei sorgt die Federwirkung des gummielastischen Materials und des komprimierten Luftvolumens für eine automatische Rückstellung des spulenförmigen Elements in seine Ausgangsform, wenn der im Bereich der Durchgangsbohrung des spulenförmigen Elements vorliegende Druck des Druckmittels einen vorbestimmten Wert unterschreitet.

In einer alternativen Ausgestaltung des Volumenaufnehmers kann es sich ferner bei diesem um ein rohrförmiges Element aus einem elastischen Kunststoff handeln, welches im Gehäuse eine radial innere Druckmittelkammer von einer radial äußeren Luftkammer trennt. So ist der Volumenaufnehmer vorteilhaft spritzgießfähig, wobei Länge und Querschnittsprofil relativ einfach gestaltbar sind. Bei dieser Ausgestaltung des Volumenaufnehmers wird, wenn eine Druckamplitude in die innere Druckmittelkammer hineinläuft, das rohrförmige Element gegen die Federwirkung des Kunststoffs geringfügig verformt, wobei das Luftvolumen in der radial äußeren Luftkammer komprimiert wird, so dass das rohrförmige Element eine vorbestimmte Aufweitung erfährt, die wiederum zu einer "Entlastung" der Druckamplitude führt. Dabei sorgt die Federwirkung des Kunststoffs und - zu einem weitaus geringeren Anteil - des komprimierten Luftvolumens in der radial äußeren Luftkammer für eine automatische Rückstellung des rohrförmigen Elements in seine Ausgangsform, wenn der in der inneren Druckmittelkammer vorliegende Druck des Druckmittels einen definierten Wert unterschreitet. Bei dieser Alternative der Vorrichtung kann das im Wesentlichen stiftförmige Einsatzteil zweckmäßig in eine zentrische Bohrung im Gehäuse eingesetzt sein, die mit der Druckmittelkammer kommuniziert.

Alternativ hierzu kann es sich bei dem Volumenaufnehmer um ein im Wesentlichen schlauchförmiges Element aus einem gummielastischen Werkstoff handeln, welches im Gehäuse eine radial innere Druckmittelkammer begrenzt und mit seiner Außenumfangsfläche an einer Innenumfangsfläche des Gehäuses anliegt, wobei die Außenumfangsfläche des Volumenaufnehmers mit einer Profilierung zur Ausbildung von Hohlräumen zwischen Volumenaufnehmer und Gehäuse versehen ist. So kann insbesondere die Volumenaufnahme des Systems vorteilhaft definiert beschränkt werden.

Als weitere Alternative für den Volumenaufnehmer ist aber auch eine Ausgestaltung denkbar, bei der im Gehäuse oder im Einsatzteil ein kleiner Zylinderraum ausgebildet ist, in dem ein federvorgespannter kleiner Kolben derart längsverschieblich aufgenommen ist, dass bei einer Druckamplitude der Kolben gegen seine Federvorspannung verschoben wird und es durch die somit bewirkte Volumenaufnahme wiederum zu einer "Entlastung" der Druckamplitude kommt. Die automatische Rückstellung des Kolbens bei Unterschreiten eines vorbestimmten Drucks des Druckmittels würde bei einer solchen Ausgestaltung durch die mit dem Kolben wirkverbundene Feder, etwa eine metallische Schraubendruckfeder bewirkt, deren Kennlinie und Vorspannung ggf. den jeweiligen konstruktiven Gegebenheiten oder Erfordernissen entsprechend auch einstellbar sein könnten, jedenfalls aber eindeutig definiert und darüber hinaus vorteilhaft weitgehend unabhängig von der Umgebungstemperatur wären.

Bei einer möglichen Variante der Vorrichtung ist vorgesehen, dass es sich bei dem Gehäuse um ein separates Gehäuse handelt, welches mit einem Nehmeranschluss und einem Geberanschluss versehen in eine Hydraulikleitung zwischen Nehmerzylinder und Geberzylinder schaltbar ist, so dass der Nehmeranschluss und der Geberanschluss mit der im Innenraum des Gehäuses ausgebildeten Druckmittelkammer kommunizieren. Diese Variante ermöglicht eine weitgehend freie bzw. den jeweiligen Einbauerfordernissen oder -vorgaben angepasste Platzierung der Vorrichtung in der Hydraulikleitung zwischen Nehmerzylinder und Geberzylinder. Hierbei besteht das separate Gehäuse vorzugsweise aus zwei Teilen, die aneinander befestigt den Innenraum begrenzen, in dem das Einsatzteil und der Volumenaufnehmer angeordnet sind. Denkbar ist allerdings auch eine Ausgestaltung, bei der das Einsatzteil und/oder - im Falle des rohrförmigen Elements - der Volumenaufnehmer einstückig mit einer der Gehäusehälften ausgebildet ist, um die Teileanzahl noch zu reduzieren. Im Innenraum des separaten Gehäuses trennt der Volumenaufnehmer vorzugsweise die Druckmittelkammer von einer Luftkammer. Das Einsatzteil ist bevorzugt zwischen den zwei Teilen des separaten Gehäuses axial eingespannt, so dass keine zusätzlichen Maßnahmen zur Befestigung des Einsatzteils zu treffen sind. Analog kann auch das rohr- bzw. schlauchförmige Element zwischen den zwei Teilen des separaten Gehäuses eingespannt sein.

Bei einer anderen Variante der Vorrichtung handelt es sich bei dem Gehäuse um ein Zylindergehäuse des Nehmerzylinders (mehr bevorzugt) oder des Geberzylinders (weniger bevorzugt), welches einen Druckanschluss aufweist. Durch Anordnung der Vorrichtung im Zylindergehäuse, insbesondere im Druckraum des Nehmerzylinders - wo für diesen Zweck kein zusätzlicher Bauraum vorgesehen werden muss, da der hier ohnehin vorhandene Zylindertotraum genutzt werden kann, so dass sich die axiale Baulänge des Nehmerzylinders verglichen mit herkömmlichen Konstruktionen nicht ändert - erfolgt die Integration der schwingungsdämpfenden Maßnahmen im hydraulischen Kraftübertragungssystem ebenfalls auf sehr platzsparende Weise, wobei ggf. sogar ein vorhandener Nehmerzylinder, wie er etwa aus der EP 1 666 752 A2 der Anmelderin bekannt ist, unverändert hergenommen werden kann, um die erfindungsgemäße Vorrichtung zu integrieren. Durch die Anordnung der erfindungsgemäßen Vorrichtung im Druckraum des Nehmerzylinders, d.h. in unmittelbarer Nähe zum Ort der Einleitung der Schwingungen in die Flüssigkeitssäule wird ferner in vorteilhafter Weise dafür gesorgt, dass sich die Druckpulsationen nicht mit maximaler Amplitude in/durch die Hydraulikleitung zwischen Nehmerzylinder und Geberzylinder fortpflanzen können, so dass auch die Gefahr minimiert wird, dass sich die Hydraulikleitung schwingungsbedingt von ihren Befestigungsstellen z.B. an der Karosserie des Kraftfahrzeugs löst bzw. sich an diesen losrüttelt.

In einer insbesondere wartungsgünstigen Alternative zu der Anordnung der Vorrichtung im Druckraum des Zylindergehäuses können Kanal und Volumenaufnehmer der Vorrichtung in einem Druckanschlussabschnitt des Zylindergehäuses enthalten sein. In zweckmäßiger Ausgestaltung ist dann das Einsatzteil in den Druckanschlussabschnitt eingesetzt und dort mittels eines Anschlussteils gehalten. Hinsichtlich insbesondere einer einfachen Montage und Austauschbarkeit ist es hierbei vorteilhaft, wenn das Einsatzteil und das Anschlussteil einstückig ausgebildet sind.

Im Hinblick auf eine möglichst gute Dämpfungswirkung hat es sich weiterhin als vorteilhaft erwiesen, wenn der Wendelabschnitt des Kanals einen Querschnitt aufweist, der kleiner oder gleich dem minimalen Querschnitt des Nehmer- und/oder des Geberanschlusses des separaten Gehäuses bzw. des Druckanschlusses des Zylindergehäuses ist, wodurch auch eine gewisse Drosselwirkung gegeben ist.

Grundsätzlich kann das Einsatzteil und/oder das Gehäuse der Vorrichtung aus einem metallischen Werkstoff, beispielsweise einer Aluminiumlegierung, etwa durch spanende Bearbeitung hergestellt werden. Insbesondere dem Erhalt einer kostengünstigen Vorrichtung förderlich ist es aber, wenn das Einsatzteil und vorzugsweise auch das Gehäuse aus einem Kunststoff spritzgegossen sind, wie schon erwähnt.

In einer weiteren Variante der Vorrichtung kann schließlich von dem Kanal ein zusätzlicher Streckenabschnitt abzweigen, der in einer geschlossenen Kammer mündet, um die Dämpfungseigenschaften weiter zu beeinflussen. Hierbei kann in der geschlossenen Kammer der vorerwähnte Volumenaufnehmer oder ein zusätzlicher Volumenaufnehmer aufgenommen sein.

### KURZE BESCHREIBUNG DER ZEICHNUNGEN

Im Folgenden wird die Erfindung anhand bevorzugter Ausführungsbeispiele unter Bezugnahme auf die beigefügten, teilweise schematischen Zeichnungen näher erläutert, in denen gleiche Bezugszeichen gleiche bzw. entsprechende Teile kennzeichnen und elastomere Teile zur Vereinfachung der Darstellung zumeist im unverformten Zustand gezeigt sind. In den Zeichnungen zeigen:
- Fig. 1: eine Längsschnittansicht eines Nehmerzylinders für eine hydraulische Kupplungsbetätigung für Kraftfahrzeuge, in dessen Druckraum ein Einsatzteil eingesetzt ist, das mit einer für das Druckmittel stets offenen Vorrichtung zur Reduzierung von Druckpulsationen ausgerüstet ist, welche in Kombination eine Leitungszusatzstrecke in Form eines Kanals und einen Volumenaufnehmer aufweist, als ein erstes Ausführungsbeispiel der erfindungsgemäßen Vorrichtung,
- Fig. 2: eine perspektivische Einzeldarstellung des bei dem Nehmerzylinder gemäß Fig. 1 im Druckanschluss befestigten topfförmigen Einsatzteils von schräg vorne,
- Fig. 3: eine Seitenansicht des Einsatzteils gemäß Fig. 2,
- Fig. 4: eine Vorderansicht des Einsatzteils gemäß Fig. 2 von links in Fig. 3,
- Fig. 5: eine Rückansicht des Einsatzteils gemäß Fig. 2 von rechts in Fig. 3,
- Fig. 6: eine Schnittansicht des Einsatzteils gemäß Fig. 2 entsprechend der Schnittverlaufslinie VI-VI in Fig. 5,
- Fig. 7: eine vergrößerte Darstellung des Details VII in Fig. 6,
- Fig. 8: eine perspektivische Einzeldarstellung des bei dem Nehmerzylinder gemäß Fig. 1 am Einsatzteil montierten elastomeren Volumenaufnehmers von schräg vorne,
- Fig. 9: eine Längsschnittansicht des Volumenaufnehmers gemäß Fig. 8,

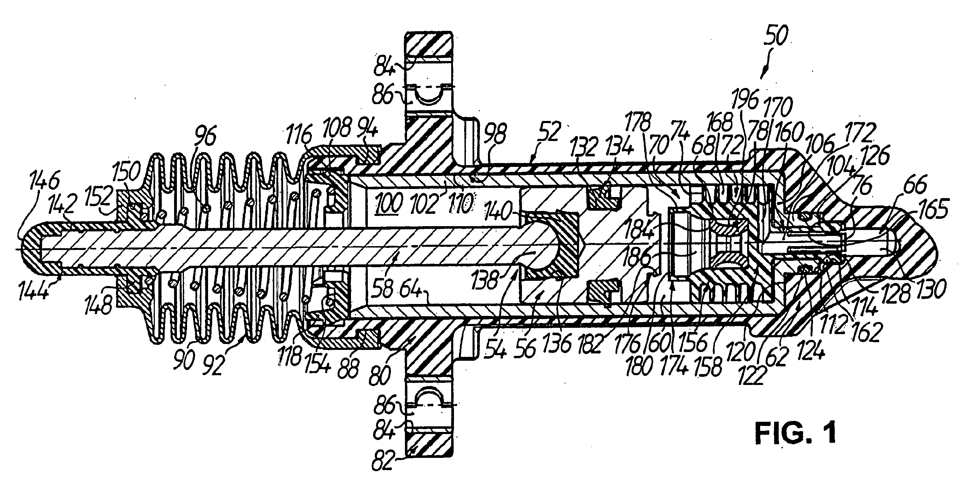

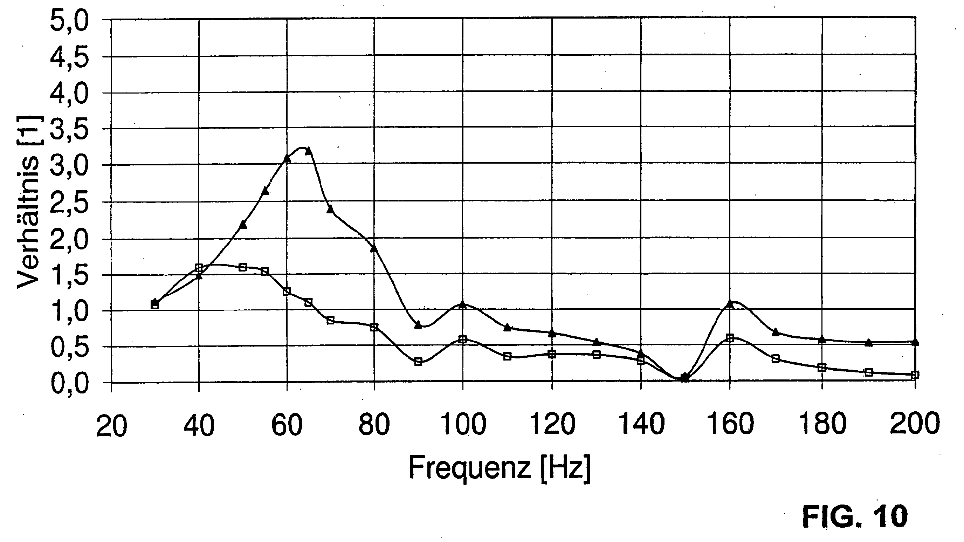

- Fig. 10: ein Diagramm, in dem für (1.) eine hydraulische Kupplungsbetätigung ohne erfindungsgemäße Vorrichtung zur Reduzierung von Druckpulsationen (Markierung mit Dreiecken) und (2.) eine hydraulische Kupplungsbetätigung mit einem entsprechend Fig. 1 ausgerüsteten Nehmerzylinder (Markierung mit nicht ausgefüllten Quadraten) das Verhältnis der an einer Kolbenstange des Geberzylinders gemessenen Beschleunigung zu der an einer Kolbenstange des Nehmerzylinders gemessenen Beschleunigung über der Frequenz aufgetragen ist, als Ergebnis eines Versuchs, bei dem eine Sinusschwingung mit variabler Frequenz und einer Amplitude von 1 g (9,81 m/s²) an die Kolbenstange des Nehmerzylinder angelegt wurde,
- Fig. 11: eine Seitenansicht einer erfindungsgemäßen Vorrichtung zur Reduzierung von Druckpulsationen nach einem zweiten Ausführungsbeispiel, die ein eigenes, d.h. vom Zylindergehäuse separates Gehäuse aufweist, ansonsten aber dem ersten Ausführungsbeispiel ähnlich ist,
- Fig. 12: eine Längsschnittansicht der Vorrichtung gemäß Fig. 11,
- Fig. 13: eine Seitenansicht einer erfindungsgemäßen Vorrichtung zur Reduzierung von Druckpulsationen nach einem dritten Ausführungsbeispiel, die ebenfalls ein eigenes, d.h. vom Zylindergehäuse separates Gehäuse besitzt, sich hinsichtlich der Ausbildung und räumlichen Anordnung von Leitungszusatzstrecke und Volumenaufnehmer aber vom zweiten Ausführungsbeispiel unterscheidet,
- Fig. 14: eine Längsschnittansicht der Vorrichtung gemäß Fig. 13,
- Fig. 15: eine perspektivische Einzeldarstellung eines in der Vorrichtung gemäß den Fig. 13 und 14 eingesetzten, stiftförmigen Einsatzteils von schräg vorne, insbesondere zur Veranschaulichung einer am Außenumfang des Einsatzteils schraubengewindeartig verlaufenden Nut, die einen Wendelabschnitt eines Kanals bildet, der als Leitungszusatzstrecke der Vorrichtung vorgesehen ist,

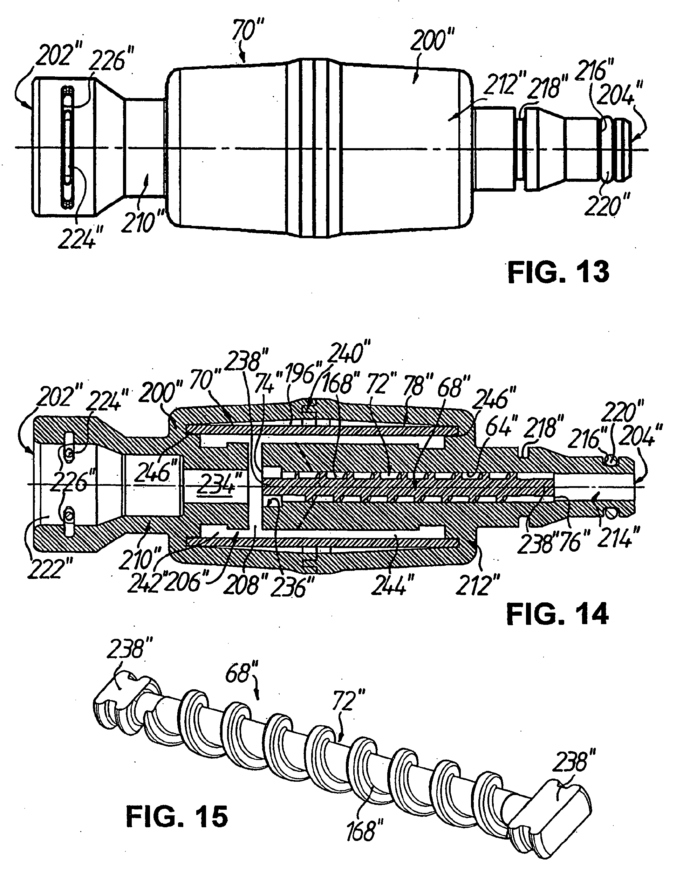

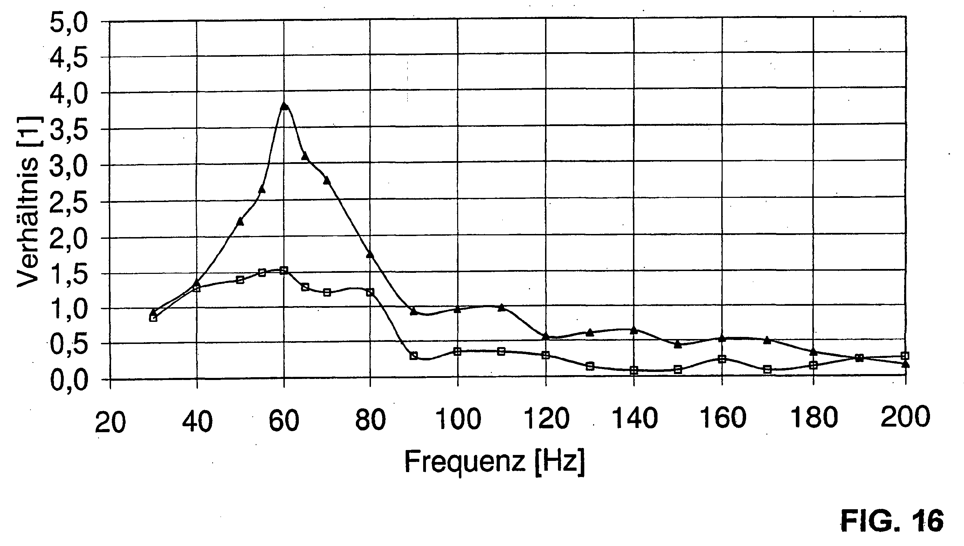

- Fig. 16: ein Diagramm analog Fig. 10, in dem für (1.) eine hydraulische Kupplungsbetätigung ohne erfindungsgemäße Vorrichtung zur Reduzierung von Druckpulsationen (Markierung mit Dreiecken) und (2.) eine hydraulische Kupplungsbetätigung, bei der eine Vorrichtung entsprechend den Fig. 13 bis 15 in die Hydraulikleitung zwischen Geberzylinder und Nehmerzylinder geschaltet ist (Markierung mit nicht ausgefüllten Quadraten), das Verhältnis der an einer Kolbenstange des Geberzylinders gemessenen Beschleunigung zu der an einer Kolbenstange des Nehmerzylinders gemessenen Beschleunigung über der Frequenz aufgetragen ist, als Ergebnis eines Versuchs, bei dem eine Sinusschwingung mit variabler Frequenz und einer Amplitude von 1 g (9,81 m/s²) an die Kolbenstange des Nehmerzylinder angelegt wurde,
- Fig. 17: eine Längsschnittansicht einer erfindungsgemäßen Vorrichtung zur Reduzierung von Druckpulsationen nach einer Variante des dritten Ausführungsbeispiels, bei der - verglichen mit Fig. 14 - insbesondere der Volumenaufnehmer anders ausgebildet ist,
- Fig. 18: eine vergrößerte Darstellung des Details XVIII in Fig. 17,
- Fig. 19: eine Längsschnittansicht einer erfindungsgemäßen Vorrichtung zur Reduzierung von Druckpulsationen nach einer Variante des zweiten Ausführungsbeispiels, die sich von Fig. 12 insbesondere dahingehend unterscheidet, dass von der Leitungszusatzstrecke ein weiterer Streckenabschnitt abzweigt, welcher in einer geschlossenen Kammer mündet, in der ein zweiter Volumenaufnehmer angeordnet sein kann,
- Fig. 20: eine abgebrochene Längsschnittansicht eines Nehmerzylinders für eine hydraulische Kupplungsbetätigung für Kraftfahrzeuge, in dessen Druckanschlussabschnitt ein Volumenaufnehmer und ein Einsatzteil mit einer Leitungszusatzstrecke in Form eines Kanals eingesetzt sind, welche in Kombination eine für das Druckmittel stets offene Vorrichtung zur Reduzierung von Druckpulsationen bilden und die im Druckanschlussabschnitt mittels eines Anschlussteils gehalten sind, ähnlich dem ersten Ausführungsbeispiel, aber nicht gemäß der Erfindung,
- Fig. 21: eine perspektivische Einzeldarstellung des bei dem Nehmerzylinder gemäß Fig. 20 im Druckanschlussabschnitt eingesetzten Einsatzteils von schräg vorne,
- Fig. 22: eine abgebrochene Längsschnittansicht eines Nehmerzylinders für eine hydraulische Kupplungsbetätigung für Kraftfahrzeuge, bei dem - ähnlich der Fig. 20 - die aus Volumenaufnehmer und Leitungszusatzstrecke in Form eines Kanals bestehende Vorrichtung zur Reduzierung von Druckpulsationen im Druckanschlussabschnitt aufgenommen ist, wobei im Gegensatz zur Fig. 20 Einsatzteil und Anschlussteil einstückig ausgebildet sind, erneut ähnlich dem ersten Ausführungsbeispiel, aber nicht gemäß der Erfindung, und
- Fig. 23: eine prinzipielle Darstellung einer hydraulischen Kupplungsbetätigung nach dem Stand der Technik.

### DETAILLIERTE BESCHREIBUNG DER AUSFÜHRUNGSBEISPIELE

Die Fig. 1 zeigt einen Nehmerzylinder 50 für ein schwingungsgedämpftes hydraulisches Kraftübertragungssystem, namentlich eine schwingungsgedämpfte hydraulische Kupplungsbetätigung für Kraftfahrzeuge. Der Nehmerzylinder 50 hat ein allgemein mit 52 beziffertes Zylindergehäuse, in dem eine Kolbenbaugruppe 54 längsverschieblich aufgenommen ist, die einen Kolben 56 und eine zumindest zug- und druckfest, also betätigungswirksam mit dem Kolben 56 verbundene Kolbenstange 58 umfasst. Im Zylindergehäuse 52 befindet sich ein Druckraum 60, der auf der in Fig. 1 linken Seite variabel von dem Kolben 56, auf der in Fig. 1 rechten Seite fest von einem Gehäuseboden 62 des Zylindergehäuses 52 und nach radial außen fest von einer Umfangswand 64 des Zylindergehäuses 52 begrenzt ist. Der Druckraum 60 ist wahlweise über einen am Gehäuseboden 62 vorgesehenen Druckanschluss 66, der im montierten Zustand des Nehmerzylinders 50 in an sich bekannter Weise (vgl. Fig. 23) über eine Druckleitung (die verglichen mit Fig. 23 ggf. auch anders ausgebildet sein kann) an einen Kupplungsgeberzylinder angeschlossen ist, mit einem Druckmittel, etwa Bremsflüssigkeit beaufschlagbar, um den Kolben 56 im Zylindergehäuse 52 zu verschieben. Wie nachfolgend noch näher beschrieben werden wird, ist in dem Druckraum 60 angrenzend an den Gehäuseboden 62 ein Einsatzteil 68 eingesetzt, welches im Druckanschluss 66 befestigt ist und im hier dargestellten ersten Ausführungsbeispiel vorteilhaft mehrere Funktionen erfüllt. Hierbei dient das Einsatzteil 68 insbesondere als Träger für eine für das Druckmittel stets offenen Vorrichtung 70 zur Reduzierung von Druckpulsationen bzw. ist mit dieser ausgerüstet.

Wie weiter unten ebenfalls noch im Detail erläutert werden wird, umfasst die im montierten Zustand des Nehmerzylinders 50 mithin zwischen den Druckraum 60 des Nehmerzylinders 50 und einen Druckraum des Geberzylinders (vgl. wiederum Fig. 23) geschaltete Vorrichtung 70 zur Reduzierung von Druckpulsationen zum einen eine Leitungszusatzstrecke in Form eines Kanals 72, der eine druckraum- bzw. nehmerzylinderseitige Öffnung 74, eine druckanschluss- bzw. geberzylinderseitige Öffnung 76 und dazwischen eine Kanallänge aufweist, die ein Mehrfaches des direkten Abstands, d.h. des "Luftlinienabstands" zwischen den beiden Öffnungen 74, 76 beträgt, und zum anderen einen am Einsatzteil 68 montierten Volumenaufnehmer 78, der unter Druck elastisch verformbar ist. Im Ergebnis sind der Kanal 72 und der Volumenaufnehmer 78 der Vorrichtung 70 zur Reduzierung von Druckpulsationen im Zylindergehäuse 52 höchst kompakt zu einer Baugruppe zusammengefasst, wobei das Einsatzteil 68 zumindest teilweise zusammen mit dem Zylindergehäuse 52 den Kanal 72 begrenzt.

Gemäß Fig. 1 weist das Zylindergehäuse 52 einen vorzugsweise aus Kunststoff spritzgegossenen Grundkörper 80 auf, der außenumfangsseitig mit einem Befestigungsflansch 82 für die Montage des Nehmerzylinders 50 im Kraftfahrzeug versehen ist. Der Befestigungsflansch 82 weist zwei Befestigungsbohrungen 84 auf, die mittels geschlitzter Stahlbuchsen 86 verstärkt sind. Durch die mit den Stahlbuchsen 86 ausgekleideten Befestigungsbohrungen 84 erstrecken sich im montierten Zustand des Nehmerzylinders 50 z.B. Schrauben (nicht gezeigt) hindurch, die der Befestigung des Nehmerzylinders 50 an etwa einer Getriebewand (nicht dargestellt) im Kraftfahrzeug dienen. In Fig. 1 links von dem Befestigungsflansch 82 hat der Grundkörper 80 des Zylindergehäuses 52 des Weiteren außenumfangsseitig eine Radialnut 88, in die eine einen die Kolbenstange 58 umgebenden Faltenbalgabschnitt 90 aufweisende elastomere Schutzkappe 92 mit einem innenumfangsseitigen Ringbund 94 eingeknüpft ist. Der Faltenbalgabschnitt 90 der Schutzkappe 92 umschließt außerdem ein auf der vom Druckraum 60 abgewandten Seite des Kolbens 56 vorgesehenes Federelement in der Form einer Schraubendruckfeder 96, die an ihrem in Fig. 1 rechten Ende am Zylindergehäuse 52 abgestützt ist und mit ihrem in Fig. 1 linken Ende an der Kolbenstange 58 angreift, so dass die Schraubendruckfeder 96 die Kolbenbaugruppe 54 in einer vom Gehäuseboden 62 weggewandten Richtung vorspannt, um die Kolbenstange 58 im montierten Zustand des Nehmerzylinders 50 in Anlage an einem Kupplungshebel (nicht gezeigt) zu halten.

Innenumfangsseitig weist der Grundkörper 80 des Zylindergehäuses 52 eine in Fig. 1 nach links offene Stufenbohrung 98 auf, in die eine vorzugsweise metallische Laufhülse 100 als weiterer Bestandteil des Zylindergehäuses 52 eingesetzt ist. Die Laufhülse 100 hat zwei hohlzylindrische Hülsenabschnitte 102, 104 unterschiedlichen Durchmessers, die am Gehäuseboden 62 des Zylindergehäuses 52 über einen Ringabschnitt 106 miteinander verbunden sind. Ausgehend von der in Fig. 1 linken Seite weist die Stufenbohrung 98 des Grundkörpers 80 nun vier Bohrungsabschnitte 108, 110, 112 und 114 verschiedenen Durchmessers auf, der sich in Fig. 1 von links nach rechts verkleinert.

Der erste Bohrungsabschnitt 108 der Stufenbohrung 98 im Grundkörper 80 hat an seinem offenen Ende einen Hinterschnitt 116, der der Festlegung eines ringförmigen, für die Montage geschlitzten Sicherungselements 118 aus vorzugsweise Kunststoff am Zylindergehäuse 52 dient, welches an der in Fig. 1 linken Stirnfläche der Laufhülse 100 anliegt und somit die Laufhülse 100 im Grundkörper 80 des Zylindergehäuses 52 sichert. Im zweiten Bohrungsabschnitt 110 der Stufenbohrung 98 des Grundkörpers 80 ist der durchmessergrößere Hülsenabschnitt 102 der Laufhülse 100 eng aufgenommen, der mit seiner Innenumfangsfläche die den Druckraum 60 begrenzende Umfangswand 64 ausbildet. An den zweiten Bohrungsabschnitt 110 schließt sich der dritte Bohrungsabschnitt 112 der Stufenbohrung 98 über eine Ringschulter 120 an, an welcher der Ringabschnitt 106 der Laufhülse 100 anliegt. Im dritten Bohrungsabschnitt 112 der Stufenbohrung 98 im Grundkörper 80 ist der durchmesserkleinere Hülsenabschnitt 104 der Laufhülse 100 eng aufgenommen. Dabei ist der Hülsenabschnitt 104 außenumfangsseitig mit einer Radialnut 122 zur Aufnahme eines O-Rings 124 versehen, welcher für eine statische Abdichtung zwischen dem dritten Bohrungsabschnitt 112 des Grundkörpers 80 und dem Hülsenabschnitt 104 der Laufhülse 100 sorgt. An den dritten Bohrungsabschnitt 112 schließt sich über eine weitere Ringschulter 126 der vierte Bohrungsabschnitt 114 des Grundkörpers 80 an, wobei die Abmessungen des durchmesserkleineren Hülsenabschnitts 104 der Laufhülse 100 einerseits und der dritten und vierten Bohrungsabschnitte 112, 114 der Stufenbohrung 98 andererseits so aufeinander abgestimmt sind, dass eine ringförmige Stirnfläche 128 des Hülsenabschnitts 104 der Laufhülse 100 einen geringen axialen Abstand zur Ringschulter 126 des Grundkörpers 80 aufweist und über diese zur nachfolgend noch näher beschriebenen Befestigung des Einsatzteils 68 im Druckanschluss 66 nach radial innen vorsteht. Der vierte Bohrungsabschnitt 114 der Stufenbohrung 98 im Grundkörper 80 ist ferner innenumfangsseitig mit einer Mehrzahl von, hier z.B. vier sich in axialer Richtung des Zylindergehäuses 52 erstreckenden Längsrippen (in Fig. 1 nicht zu erkennen) versehen, die nach radial innen vorstehen, ungleichmäßig bzw. asymmetrisch über dem Umfang des vierten Bohrungsabschnitts 114 verteilt sind und einer Drehwinkelorientierung des Einsatzteils 68 im Druckanschluss 66 dienen, wie nachfolgend ebenfalls noch näher erläutert werden wird. An dem in Fig. 1 rechten Ende des vierten Bohrungsabschnitts 114 der Stufenbohrung 98 mündet schließlich eine im Grundkörper 80 ausgebildete, durchmesserkleinere Druckanschlussbohrung 130 im vierten Bohrungsabschnitt 114.

Aus der obigen Beschreibung ist ersichtlich, dass die Druckanschlussbohrung 130, der vierte Bohrungsabschnitt 114 der Stufenbohrung 98 sowie der in deren drittem Bohrungsabschnitt 112 aufgenommene Hülsenabschnitt 104 der Laufhülse 100 Bestandteil des Druckanschlusses 66 sind, über den der Druckraum 60 des Nehmerzylinders 50 mit dem Druckmittel beaufschlagt werden kann. Infolge der durch den O-Ring 124 bewirkten statischen Abdichtung am Außenumfang des durchmesserkleineren Hülsenabschnitts 104 der Laufhülse 100 erfährt diese bei einer Druckbeaufschlagung des Druckraums 60 über den Druckanschluss 66, bei welcher der hydraulische Druck zum einen auf die ringförmige Stirnfläche 128 des Hülsenabschnitts 104 und zum anderen auf die dieser gegenüber flächengrößeren, dem Druckraum 60 zugewandten Stirnfläche des Ringabschnitts 106 der Laufhülse 100 wirkt, eine resultierende Kraft nach rechts in Fig. 1, die bestrebt ist, die Laufhülse 100 in der Stufenbohrung 98 des Grundkörpers 80 zu halten, die Befestigung der Laufhülse 100 im Grundkörper 80 mittels des Sicherungselements 118 also entlastet.

Wie der Fig. 1 des Weiteren zu entnehmen ist, weist der mit geringem Radialspiel im durchmessergrößeren Hülsenabschnitt 102 der Laufhülse 100 des Zylindergehäuses 52 geführte, im dargestellten Ausführungsbeispiel metallische Kolben 56 am Außenumfang eine Radialnut 132 zur Aufnahme eines Nutrings 134 auf. Der elastomere Nutring 134 liegt in an sich bekannter Weise mit seiner außenumfangsseitigen Dichtlippe unter einer gewissen Vorspannung an der Umfangswand 64 des Zylindergehäuses 52 an und sorgt somit für eine dynamische Abdichtung des Druckraums 60 nach links in Fig. 1.

Auf der in Fig. 1 linken Seite ist der Kolben 56 ferner mit einer mittigen Aussparung 136 versehen, in der ein am in Fig. 1 rechten Ende der Kolbenstange 58 ausgebildeter Kugelkopf 138 mittels eines Sicherungselements 140 gelenkig gehalten ist, so dass die Kolbenstange 58 bezüglich des Kolbens 56 eine gewisse Winkelbeweglichkeit hat. Anstelle der in Fig. 1 gezeigten Ausgestaltung der Kolbenbaugruppe 54 könnte diese auch einteilig ausgebildet sein, mit einer zur Kolbenstange hin konisch oder ballig abfallenden Kolbenaußenfläche zur Gewährleistung der Winkelbeweglichkeit, wie es prinzipiell aus der DE 43 22 969 A1 oder der DE 43 31 241 A1 bekannt ist.

Die im dargestellten Ausführungsbeispiel metallische Kolbenstange 58 hat auf der in Fig. 1 linken Seite ein profiliertes Ende 142, auf das ein Endstück 144 aus Kunststoff aufgespritzt ist, welches eine im Wesentlichen sphärische Endfläche 146 aufweist, über die die Kolbenstange 58 betätigungswirksam am Kupplungshebel (nicht gezeigt) angreift. Am in Fig. 1 rechten Ende des Endstücks 144 bildet dieses einen Ringbund 148 der Kolbenstange 58 aus, der zum einen der Anbindung der Schutzkappe 92 an der Kolbenstange 58 dient, wobei der Ringbund 148 formschlüssig in einer im Wesentlichen komplementär geformten Ringaussparung 150 in einem Befestigungsabschnitt 152 der Schutzkappe 92 eingreift, der sich auf der vom Druckraum 60 abgewandten Seite der Schutzkappe 92 an den Faltenbalgabschnitt 90 der Schutzkappe 92 anschließt. Zum anderen bildet der Ringbund 148 der Kolbenstange 58 mit seiner dem Druckraum 60 zugewandten Stirnseite ein Widerlager für die Schraubendruckfeder 96 aus, wobei von dem dem Ringbund 148 zugewandten Ende der vorgespannten Schraubendruckfeder 96 auch eine gewisse radiale Zentrierwirkung für die Kolbenstange 58 ausgeht, die bei der Montage des Nehmerzylinders 50 im Kraftfahrzeug von Vorteil ist.

Der Fig. 1 ist ferner zu entnehmen, dass das Sicherungselement 118 zum Halten der Laufhülse 100 im Zylindergehäuse 52 auf seiner vom Druckraum 60 abgewandten Seite mit einer Axialnut 154 versehen ist, die als weiteres Widerlager und zur Zentrierung des dem Druckraum 60 zugewandten, in Fig. 1 rechten Endes der Schraubendruckfeder 96 dient, welche sich im Durchmesser ausgehend vom Ringbund 148 der Kolbenstange 58 zur Axialnut 154 hin im Wesentlichen konisch erweitert, also kegelstumpfförmig ausgebildet ist. Durch diese "Herausverlagerung" der Schraubendruckfeder 96 aus dem Druckraum 60 und der Laufhülse 100 hin zu der gezeigten Stellung zwischen Sicherungselement 118 und Ringbund 148 an der Kolbenstange 58 kann gegenüber vorbekannten Konstruktionen vorteilhaft das Verhältnis von Hub- zu Totraumvolumen - oder Istvolumen in der dargestellten (Einbau)Grundstellung des Kolbens 56 - des Druckraums 60 verringert werden, was letztendlich eine sehr kurze axiale Baulänge des eigentlichen Zylindergehäuses 52 bedingt. Darüber hinaus wird, da der Druckraum 60 keine Kolbenrückstellfeder aufzunehmen hat, an der sich Luftblasen "festsetzen" könnten, der Druckraum 60 bei einem Rücklauf des Kolbens 56 aus einer Betätigungsstellung in seine Grundstellung vom Druckmittel gut durchspült bzw. entleert, was zu einer sehr guten Entlüftung des Nehmerzylinders 50 beiträgt.

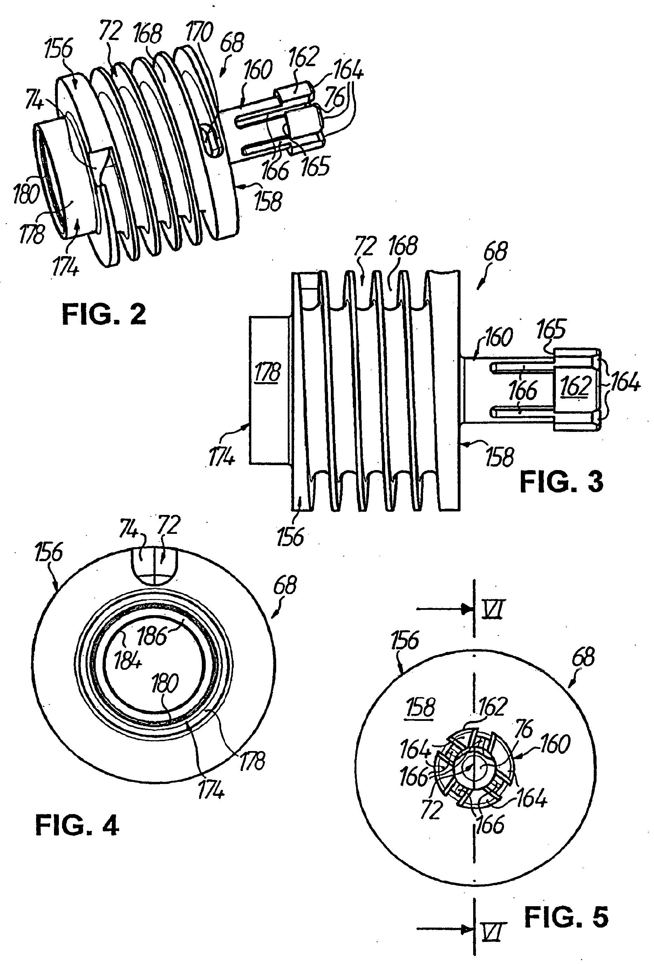

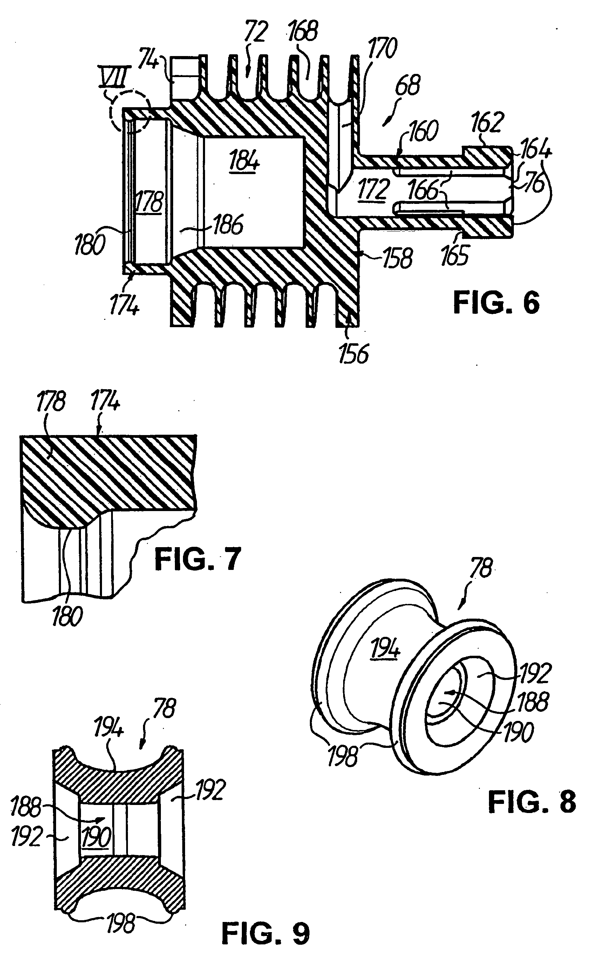

Den Fig. 2 bis 9 sind weitere Details der Vorrichtung 70 zur Reduzierung von Druckpulsationen, namentlich zu dem aus einem geeigneten Kunststoff, etwa aus einem glasfaserverstärkten Polyamid 66 spritzgegossenen Einsatzteil 68 (Fig. 2 bis 7) und dem darin gehaltenen, elastomeren Volumenaufnehmer 78 (Fig. 8 und 9) zu entnehmen.

Gemäß insbesondere den Fig. 1 und 6 ist das Einsatzteil 68 im Wesentlichen topfförmig ausgebildet, mit einem Mantelabschnitt 156, dessen Außendurchmesser im Wesentlichen dem Innendurchmesser der Umfangswand 64 des Zylindergehäuses 52 entspricht, und einem Boden 158, an dem sich ein im Wesentlichen hohlzylindrischer Fortsatz 160 anschließt, der in dem Druckanschluss 66 des Zylindergehäuses 52 eingesteckt ist.

Genauer gesagt ist das Einsatzteil 68 axial formschlüssig im Druckanschluss 66 des Zylindergehäuses 52 befestigt, nämlich mittels einer Schnappverbindung. Hierfür ist der Fortsatz 160 des Einsatzteils 68 ausgehend von seinem freien Ende am Außenumfang mit einem segmentierten Ringbund 162 versehen und zur Bildung einer Mehrzahl von Federarmen 164 (siehe insbesondere die Fig. 2, 3, 5 und 6) mehrfach längsgeschlitzt, wobei eine durch den Ringbund 162 des Fortsatzes 160 gebildete, zum Druckraum 60 hingewandte Widerlagerfläche 165 gemäß Fig. 1 die über den vierten Bohrungsabschnitt 114 der Stufenbohrung 98 im Grundkörper 80 nach radial innen überstehende, ringförmige Stirnfläche 128, welche vom durchmesserkleineren Hülsenabschnitt 104 der Laufhülse 100 gebildet ist, im Druckanschluss 66 des Zylindergehäuses 52 schnapphakenartig hintergreift. Gemäß insbesondere Fig. 5 sind es vier sich in Längsrichtung des Fortsatzes 160 erstreckende Schlitze 166, die im dargestellten Ausführungsbeispiel den Fortsatz 160 des Einsatzteils 68 unterbrechen und deren asymmetrische Verteilung über dem Umfang des Fortsatzes 160 der Verteilung der oben erwähnten Längsrippen (nicht gezeigt) im vierten Bohrungsabschnitt 114 der Stufenbohrung 98 im Grundkörper 80 des Zylindergehäuses 52 entspricht. Hierbei sind die Schlitze 166 im Fortsatz 160 des Einsatzteils 68 einerseits und die Längsrippen im Grundkörper 80 des Zylindergehäuses 52 andererseits maßlich derart aufeinander abgestimmt, dass im montierten Zustand des Einsatzteils 68 die gehäuseseitigen Längsrippen mit geringem Umfangsspiel in die Schlitze 166 eingreifen, dabei aber nicht nach radial innen über die Federarme 164 vorstehen. Die asymmetrische, aufeinander abgestimmte Umfangsverteilung der Längsrippen / Schlitze 166 sorgt auf einfache Weise für eine eindeutige Drehwinkelorientierung des montierten Einsatzteils 68 im Nehmerzylinder 50, nämlich derart, dass sich die druckraumseitige Öffnung 74 des Kanals 72 der Vorrichtung 70 zur Reduzierung von Druckpulsationen in der Einbaulage des Nehmerzylinders 50 oben nahe der durch die Umfangswand 64 gebildeten Innenumfangsfläche des Zylindergehäuses 52 befindet, wie in Fig. 1 gezeigt.

Zur vorzugsweise automatisierten Herstellung der vorbeschriebenen Schnappverbindung zwischen dem Zylindergehäuse 52 und dem bezüglich des Zylindergehäuses 52 winkelorientierten Einsatzteil 68 wird Letzteres ausgehend vom offenen Ende des mit der Laufhülse 100 ausgekleideten Zylindergehäuses 52 in die Laufhülse 100 eingeschoben bis die Federarme 164 des Fortsatzes 160 an einer kleinen Schräge zwischen dem Ringabschnitt 106 und dem Innenumfang des durchmesserkleineren Hülsenabschnitts 104 der Laufhülse 100 zur Anlage gelangen. Bei der weiteren axialen Relativverschiebung des Einsatzteils 68 bezüglich des Zylindergehäuses 52 federn die Federarme 164 nach radial innen. In der Folge fädeln sich die Längsrippen (nicht gezeigt) im vierten Bohrungsabschnitt 114 des Grundkörpers 80 des Zylindergehäuses 52 in den Schlitzen 166 des Fortsatzes 160 des Einsatzteils 68 ein, bevor die Federarme 164 wieder nach radial außen auffedern und mit ihrer segmentierten Widerlagerfläche 165 hinter der ringförmigen Stirnfläche 128 des Hülsenabschnitts 104 verrasten. Im Wesentlichen gleichzeitig kommt der Boden 158 des Einsatzteils 68 mit seiner dem Druckanschluss 66 zugewandten Stirnseite an der dem Druckraum 60 zugewandten Stirnfläche des Ringabschnitts 106 der Laufhülse 100 zur Anlage. Da sowohl der Übergang von der dem Druckanschluss 66 zugewandten Stirnfläche der Federarme 164 zu deren Außenumfangsfläche als auch der Übergang der dem Druckraum 60 zugewandten Stirnfläche der Längsrippen (nicht dargestellt) zu deren Innenumfangsfläche rechtwinklig, nur mit einer gebrochenen Kante, d.h. ohne Schräge ausgeführt ist, lässt sich das Einsatzteil 68 zum Zylindergehäuse 52 nur bei korrekter Winkelorientierung dieser Teile zueinander fügen. Bei dem Versuche, ein nicht oder inkorrekt winkelorientiertes Einsatzteil 68 zum Zylindergehäuse 52 zu fügen, stoßen die einander zugewandten Stirnflächen an den Federarmen 164 einerseits und den Längsrippen (nicht gezeigt) andererseits im Wesentlichen flächig aufeinander und verhindern somit eine weitere axiale Verschiebung des Einsatzteils 68 bezüglich des Zylindergehäuses 52. Da im Übrigen die Winkelorientierung des Einsatzteils 68 bezüglich des Zylindergehäuses 52 an dessen Grundkörper 80 erfolgt, wird eine in Umfangsrichtung wirkende Fixierung der Laufhülse 100 im Grundkörper 80 nicht benötigt.

Wie insbesondere den Fig. 1 und 6 zu entnehmen ist, weist der Kanal 72 im Einsatzteil 68 einen schraubengewindeartig verlaufenden Wendelabschnitt 168 auf, der über einen im Boden 158 des Einsatzteils 68 in radialer Richtung verlaufenden Verbindungsabschnitt 170 mit einem durch den Fortsatz 160 des Einsatzteils 68 gebildeten, in axialer Richtung verlaufenden Endabschnitt 172 verbunden ist, so dass der Wendelabschnitt 168 sowohl mit der nehmerzylinderseitigen Öffnung 74 als auch mit der geberzylinderseitigen Öffnung 76 des Kanals 72 kommuniziert. Dabei ist der Wendelabschnitt 168 des Kanals 72 am Außenumfang des Mantelabschnitts 156 des Einsatzteils 68 vorzugsweise spritzgießtechnisch als Nut ausgebildet, die im montierten Zustand des Einsatzteils 68 nach radial außen von der durch die Umfangswand 64 gebildeten Innenumfangsfläche des Zylindergehäuses 52 abgedeckt ist. Im dargestellten Ausführungsbeispiel umfasst der Wendelabschnitt 168 fünf vollständige Windungen; es ist jedoch ersichtlich, dass der Wendelabschnitt den jeweiligen funktionalen Erfordernissen entsprechend auch mehr oder weniger Windungen umfassen kann, was sich - ebenso wie andere, von der gezeigten, im Wesentlichen rechteckigen Querschnittsform abweichende Querschnittsformen des Wendelabschnitts - leicht spritzgießtechnisch bewerkstelligen lässt. Der Querschnitt bzw. die Querschnittsfläche des Wendelabschnitts 168 des Kanals 72 ist vorzugsweise so zu wählen, dass er/sie kleiner oder gleich dem minimalen Querschnitt des Druckanschlusses 66 ist, der im dargestellten Ausführungsbeispiel durch die Druckanschlussbohrung 130 definiert ist.

Gemäß insbesondere den Fig. 1, 6 und 7 weist das Einsatzteil 68 ferner an seinem druckraumseitigen Ende einen Fesselabschnitt 174 auf, welcher mit einem druckraumseitigen Fortsatz 176 des Kolbens 56 dergestalt zusammenwirkt, dass der Kolben 56 vor einer Druckmittelbefüllung oder ersten Betätigung des Nehmerzylinders 50 in einer vorbestimmten Hubstellung bezüglich des Zylindergehäuses 52 fixiert und mit der Druckmittelbefüllung bzw. ersten Betätigung des Nehmerzylinders 50 gegenüber dem Zylindergehäuse 52 freigebbar ist. Genauer gesagt umfasst der Fesselabschnitt 174 des Einsatzteils 68 einen sich an dessen Mantelabschnitt 156 in Fig. 1 nach links anschließenden, bezüglich einer Mittelachse des Druckraums 60 axial ausgefluchteten Hohlzylinder 178 mit einem innenumfangsseitig umlaufenden, nach radial innen vorspringenden Ringwulst 180, der in Fig. 7 vergrößert gezeigt ist, während der zentrische Fortsatz 176 am Kolben 56 außenumfangsseitig mit einem Ringbund 182 (siehe Fig. 1) versehen ist, der eine sich zum Druckanschluss 66 hin geringfügig verjüngende Außenfläche aufweist und im am Einsatzteil 68 fixierten Zustand des Kolbens 56 den Ringwulst 180 formschlüssig hintergreift. Hierfür sind der gemäß insbesondere Fig. 7 zum Druckraum 60 hin abgerundete Ringwulst 180 einerseits und der Ringbund 182 andererseits maßlich derart aufeinander abgestimmt, dass der lichte Innendurchmesser des Ringwulstes 180 geringfügig kleiner ist als der größte Außendurchmesser des Ringbunds 182, während dessen Abstand zur Stirnfläche des Kolbens 56 geringfügig größer ist als die axiale Länge des Ringwulstes 180.

Zur Fesselung der Kolbenbaugruppe 54 am Einsatzteil 68 beim Zusammenbau des Nehmerzylinders 50 wird die Kolbenbaugruppe 54 gegen die Kraft der Schraubendruckfeder 96 soweit im Sinne einer Verkleinerung des Druckraums 60 in das Zylindergehäuse 52 hinein geschoben bis der Fortsatz 176 am Kolben 56 mit seinem zum Einsatzteil 68 hin abgeschrägten Ringbund 182 an dem dem Druckraum 60 zugewandten, abgerundeten Ringwulst 180 zur Anlage gelangt. Bei einer weiteren axialen Relativverschiebung der Kolbenbaugruppe 54 bezüglich des Zylindergehäuses 52 in Richtung des Druckanschlusses 66 weitet der Ringbund 182 am Kolbenfortsatz 176 den Ringwulst 180 des Fesselabschnitts 174 elastisch nach radial außen auf. Nach Überdrücken des Ringwulstes 180 schnappt dieser infolge der elastischen Eigenschaften des Materials des Einsatzteils 68 hinter dem Ringbund 182, also in dem Ringspalt zwischen dem Ringbund 182 und der dem Druckraum 60 zugewandten Stirnfläche des Kolbens 56 ein. Die Kolbenbaugruppe 54 ist nun formschlüssig am Fesselabschnitt 174 des Einsatzteils 68 fixiert.

Da somit die Kolbenbaugruppe 54 in einer Stellung gefesselt ist, in der sie so weit wie möglich in das Zylindergehäuse 52 hineingeschoben ist, benötigt der Nehmerzylinder 50 bei der Lagerung, dem Transport und der Montage im Kraftfahrzeug nur einen geringen Raum. Darüber hinaus kann der Nehmerzylinder 50 im Wesentlichen kraftfrei im Kraftfahrzeug montiert werden, weil die Schraubendruckfeder 96 nicht zusammengedrückt werden muss, vielmehr vermittels der durch das Einsatzteil 68 bewirkten Fesselung der Kolbenbaugruppe 54 in einer vorgespannten Stellung gehalten ist.

Für die erste Betätigung des im Kraftfahrzeug montierten Nehmerzylinders 50 wird das Druckmittel über den Druckanschluss 66 dem Druckraum 60 zugeführt. Infolge des sich hierbei im Druckraum 60 aufbauenden Drucks, der an der Wirkfläche des Kolbens 56 angreift, erfährt der Kolben 56 eine in Fig. 1 nach links gerichtete Kraft, die sich der Kraft der Schraubendruckfeder 96 aufaddiert. Übersteigt die Summe dieser Kräfte die Haltekraft der Verbindung zwischen dem Fortsatz 176 des Kolbens 56 und dem Fesselabschnitt 174 des Einsatzteils 68 wird der Ringwulst 180 am Fesselabschnitt 174 über den Ringbund 182 am Fortsatz 176 wieder aufgedehnt, worauf die Kolbenbaugruppe 54 vom Einsatzteil 68 freikommt. Eine weitere Fesselung der Kolbenbaugruppe 54 im Betrieb des Nehmerzylinders 50 ist nicht vorgesehen und kann auch nicht erfolgen, da der in Fig. 1 gezeigte axiale Abstand zwischen dem Fortsatz 176 am Kolben 56 und dem Fesselabschnitt 174 am Einsatzteil 68 im Betrieb des Nehmerzylinders 50 nicht mehr unterschritten wird.

Aus der obigen Beschreibung ist ersichtlich, dass die Haltekraft der Verbindung zwischen dem Fortsatz 176 des Kolbens 56 und dem Fesselabschnitt 174 des Einsatzteils 68 konstruktiv derart ausgelegt ist, dass sie einerseits hinreichend größer ist als die Federkraft der Schraubendruckfeder 96, um ein ungewolltes Lösen der Fesselung der Kolbenbaugruppe 54 zu verhindern, andererseits aber ausreichend kleiner als die Haltekraft der Verbindung zwischen dem Einsatzteil 68 und dem Zylindergehäuse 52, so dass das Einsatzteil 68 bei der Erstbetätigung des Nehmerzylinders 50 nicht aus dem Druckanschluss 66 hinausgezogen wird.

Wie des Weiteren der Fig. 1 zu entnehmen ist, ist der Volumenaufnehmer 78 am Innenumfang des Mantelabschnitts 156 des Einsatzteils 68 montiert, so dass der Wendelabschnitt 168 des Kanals 72 den Volumenaufnehmer 78 koaxial umgibt. Hierfür weist das Einsatzteil 68 eine zylindrische Sackbohrung 184 auf, an die sich in den Fig. 1 und 6 nach links ein sich konisch erweiternder Fügeabschnitt 186 für den Volumenaufnehmer 78 anschließt, der mit einer kleinen Stufe am Hohlzylinder 178 endet.

Bei dem in den Fig. 8 und 9 näher gezeigten Volumenaufnehmer 78 handelt es sich um ein gummielastisches, im Wesentlichen spulenförmiges Element, welches eine Durchgangsbohrung 188 hat, mit einem mittigen Zylinderabschnitt 190 und zu beiden Seiten des Zylinderabschnitts 190 gelegenen Öffnungstrichtern 192. Außenumfangsseitig ist der bezüglich seiner Längsachse rotationssymmetrisch und bezüglich einer gedachten, zu der Längsachse senkrechten Ebene spiegelsymmetrisch ausgebildete Volumenaufnehmer 78 mit einer hohlkehlenförmigen Ringaussparung 194 versehen, die gemäß Fig. 1 im Bereich der Sackbohrung 184 zusammen mit dem Innenumfang des Mantelabschnitts 156 des Einsatzteils 68 eine ringförmige Luftkammer 196 begrenzt. Die Luftkammer 196 ist zu beiden Seiten, d.h. in Fig. 1 nach rechts bzw. links durch ringförmige Dichtwulste 198 (siehe die Fig. 8 und 9) des Volumenaufnehmers 78 abgedichtet. Die Wirkungsweise dieses Volumenaufnehmers 78 wurde eingangs schon näher erläutert, so dass an dieser Stelle weitere Ausführungen hierzu entbehrlich erscheinen. In diesem Zusammenhang zu erwähnen ist schließlich noch, dass sich die dargestellte Anordnung bzw. Positionierung von Kanal 72 und Volumenaufnehmer 78, bei der der Volumenaufnehmer 78 dem die Leitungszusatzstrecke bildenden Kanal 72 vom Druckraum 60 aus gesehen hydraulisch vorgeschaltet ist, als besonders schwingungsdämpfend wirksam erwiesen hat.

Die Schwingungsdämpfungseigenschaften der vorbeschriebenen Vorrichtung 70 zur Reduzierung von Druckpulsationen sind in Fig. 10 gut zu erkennen, die beispielhaft das Ergebnis von Versuchen illustriert, bei denen (1.) eine Sinusschwingung mit variabler Frequenz und einer Amplitude von 1 g an die Kolbenstange 58 des Nehmerzylinders 50 angelegt wurde, (2.) die Beschleunigungen an einer Kolbenstange (nicht gezeigt) des mit dem Nehmerzylinder 50 hydraulisch verbundenen Geberzylinders (nicht dargestellt) und an der Kolbenstange 58 gemessen und (3.) für die Versuchsauswertung zueinander ins Verhältnis gesetzt über der Erregerfrequenz in einem Diagramm aufgetragen wurden. Hierbei kamen ein Nehmerzylinder 50 mit einem effektiven Kolbenwirkdurchmesser von 22,20 mm und ein Geberzylinder mit einem effektiven Kolbenwirkdurchmesser von 19,05 mm zum Einsatz, die über eine ausgehend vom Nehmerzylinder 50 aus (a) einem elastomeren Kupplungsschlauchabschnitt (Innendurchmesser: ca. 6 mm, Außendurchmesser: ca. 12 mm, Länge: ca. 250 mm, eine Gewebelage) und (b) einem metallischen Kupplungsrohrabschnitt (Innendurchmesser: ca. 4,75 mm, Wandstärke: ca. 0,7 mm, Länge: ca. 610 mm) bestehende Druckleitungsanordnung hydraulisch miteinander verbunden waren. Die Länge des Wendelabschnitts 168 des Kanals 72 der Vorrichtung 70 zur Reduzierung von Druckpulsationen betrug ca. 200 mm, mit einem offenen Querschnitt von ca. 6 mm². Als Volumenaufnehmer 78 kam ein Gummidichtstopfen entsprechend den Fig. 8 und 9 mit einer Gesamtlänge von ca. 7,3 mm, einem maximalen Außendurchmesser von ca. 9,6 mm im Bereich der Dichtwulste 198 und einem Innendurchmesser von ca. 3 mm im Bereich des Zylinderabschnitts 190 zum Einsatz.

Das Schwingungsdämpfungsvermögen der getesteten Vorrichtung 70 zur Reduzierung von Druckpulsationen (Markierung mit nicht ausgefüllten Quadraten) im Vergleich zu der Anordnung ohne Vorrichtung zur Reduzierung von Druckpulsationen (Markierung mit Dreiecken) ist in Fig. 10 klar ersichtlich: Es kommt zu einer erheblichen Verkleinerung und Verlagerung des ersten Maximums (bei ca. 65 Hz) zu niedrigeren Frequenzen; auch die weiteren Schwingungsmaxima werden stark "gedrückt", wenigstens um ca. 50%. Für den Fachmann ist klar, dass diese Ergebnisse nur beispielhaft zu verstehen sind und die Vorrichtung 70 zur Reduzierung von Druckpulsationen im Hinblick auf ihre Schwingungsdämpfungswirkung für die jeweilige Einbausituation natürlich wie hinsichtlich des Amplitudenverhältnisses bzw. des zu dämpfenden Frequenzbereichs gewünscht optimiert werden kann, sei es durch eine Änderung der Form/Abmessungen von Kanal 72 bzw. Volumenaufnehmer 78 oder die Wahl eines anderen Werkstoffs für den Volumenaufnehmer 78.

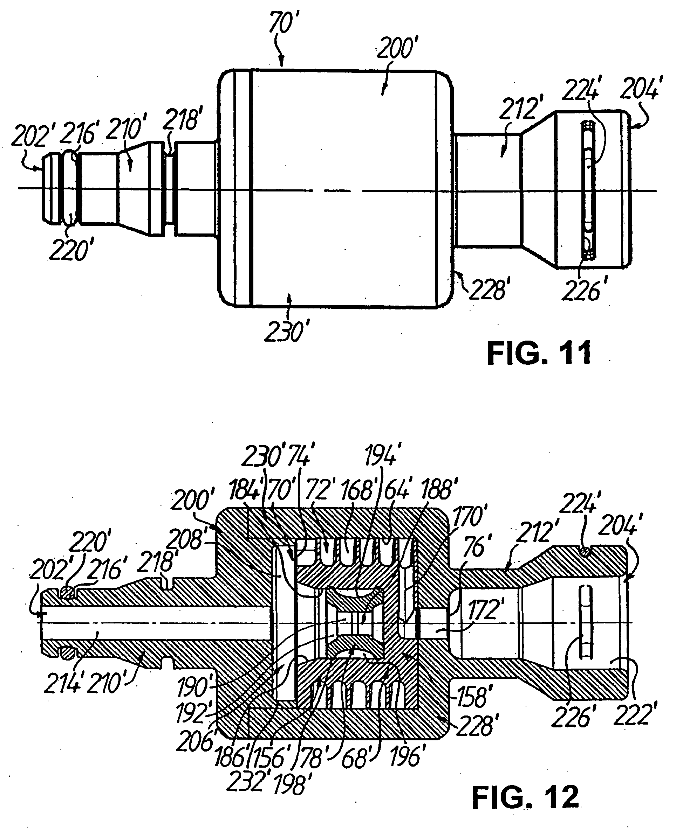

Nachfolgend sollen unter Bezugnahme auf die Fig. 11 bis 16 das zweite und dritte Ausführungsbeispiel nur insoweit beschrieben werden, als sie sich von dem vorbeschriebenen ersten Ausführungsbeispiel unterscheiden. In diesen Figuren wurden gleiche bzw. entsprechende Teile mit den gleichen Bezugszeichen versehen, ergänzt mit einem Strich (') für das zweite Ausführungsbeispiel bzw. zwei Strichen (") für das dritte Ausführungsbeispiel (nicht in der Bezugszeichenliste am Ende aufgeführt).

Das in den Fig. 11 und 12 dargestellte zweite Ausführungsbeispiel unterscheidet sich vom ersten Ausführungsbeispiel hauptsächlich dahingehend, dass es sich bei dem Gehäuse zur Aufnahme des Kanals 72' und des Volumenaufnehmers 78' um ein separates, d.h. vom Zylindergehäuse des Nehmer- bzw. Geberzylinders getrenntes Gehäuse 200' handelt, welches mit einem Nehmeranschluss 202' und einem Geberanschluss 204' versehen in die Hydraulikleitung (nicht dargestellt) zwischen Nehmerzylinder und Geberzylinder schaltbar ist, so dass der Nehmeranschluss 202' und der Geberanschluss 204' (Letzterer über den Kanal 72') mit einer in einem Innenraum 206' des Gehäuses 200' ausgebildeten Druckmittelkammer 208' kommunizieren. Im dargestellten Ausführungsbeispiel besteht das separate Gehäuse 200' aus zwei aus einem geeigneten Kunststoff spritzgegossenen Teilen 210', 212', die aneinander befestigt den Innenraum 206' begrenzen, in dem das modifizierte, ebenfalls aus einem geeigneten Kunststoff spritzgegossene Einsatzteil 68' entsprechend Fig. 12 und der Volumenaufnehmer 78' gemäß den Fig. 8 und 9 des ersten Ausführungsbeispiels angeordnet sind. Letzterer trennt analog dem ersten Ausführungsbeispiel im Innenraum 206' des Gehäuses 200' die Druckmittelkammer 208' von einer ringförmigen Luftkammer 196'.

An dem in Fig. 12 linken Gehäuseteil 210' ist der Nehmeranschluss 202' als Steckteil mit an sich bekannter Steckgeometrie ausgeführt, umfassend eine zentrale Durchgangsbohrung 214' zur Druckmittelkammer 208' und zwei axial beabstandete Radialnuten 216', 218', von denen die äußere Radialnut 216' der Aufnahme eines O-Rings 220' für die Abdichtung zum (Aufnahme)Gegenteil (nicht gezeigt) dient, während die zweite Radialnut 218' im montierten Zustand der Vorrichtung 70' ein am (Aufnahme)Gegenteil befestigtes Sicherungselement (nicht dargestellt) aus Federstahldraht aufnimmt. An dem in Fig. 12 rechten Gehäuseteil 212' hingegen ist der Geberanschluss 204' als Aufnahmeteil mit an sich bekannter Aufnahmegeometrie ausgebildet, umfassend eine Aussparung 222', in die das (Steck)Gegenteil (nicht gezeigt) einsteckbar ist, und ein außenumfangsseitig angeordnetes Sicherungselement 224' aus Federstahldraht, das einen quer zur Längsachse des Geberanschlusses 204' verlaufenden Steckschlitz 226' durchgreift, um im montierten Zustand der Vorrichtung 70' das (Steck)Gegenteil auf an sich bekannte Weise in der Aussparung 222' zu sichern.

An den Geberanschluss 204' in Fig. 12 nach links anschließend ist das rechte Gehäuseteil 212' im Wesentlichen topfförmig ausgebildet, mit einem Boden 228', durch den sich der Endabschnitt 172' des Kanals 72' hindurch erstreckt, um für eine zentrale hydraulische Verbindung zwischen dem Verbindungsabschnitt 170' im Boden 158' des Einsatzteils 68' und der Aussparung 222' des Gehäuseteils 212' zu sorgen, und einem Mantelabschnitt 230', der innenumfangsseitig die den Wendelabschnitt 168' des Kanals 72' nach radial außen abdeckende Umfangswand 64' ausbildet. Im Gegensatz zum ersten Ausführungsbeispiel weist das Einsatzteil 68' beim zweiten Ausführungsbeispiel am Boden 158' keinen Fortsatz zur Befestigung im Gehäuse 200' auf, ist vielmehr axial zwischen den beiden Gehäuseteilen 210', 212' eingespannt. Dabei liegt das Einsatzteil 68' in Fig. 12 rechts mit seinem Boden 158' flächig am Boden 228' des Gehäuseteils 212' an, während das Einsatzteil 68' auf der in Fig. 12 linken Seite mittels eines zentral hohlzylindrisch ausgesparten, in dem Mantelabschnitt 230' des rechten Gehäuseteils 212' eingesteckten und am Einsatzteil 68' anliegenden Fortsatzes 232' des linken Gehäuseteils 210' im Innenraum 206' des Gehäuses 200' gehalten ist. Im Bereich des Fortsatzes 232' sind die beiden Gehäuseteile 210', 212', die hier eng ineinander greifen, vorzugsweise miteinander verklebt oder ultraschallverschweißt; alternativ hierzu könnte aber auch eine Schraubverbindung vorgesehen sein.

Wie eingangs bereits erwähnt, kann die so ausgebildete Vorrichtung 70' zur Reduzierung von Druckpulsationen weitgehend frei in der Hydraulikleitung zwischen Nehmerzylinder und Geberzylinder angeordnet werden, z.B. zwischen einem nehmerzylinderseitigen Schlauchabschnitt und einem geberzylinderseitigen Rohrabschnitt der Hydraulikleitung. Die Funktion bzw. Wirkungsweise der Vorrichtung 70' entspricht hierbei derjenigen der Vorrichtung 70 gemäß dem ersten Ausführungsbeispiel.

Bei dem in den Fig. 13 bis 15 dargestellten dritten Ausführungsbeispiel sind zunächst der Nehmeranschluss 202" und der Geberanschluss 204" des zweiteiligen Gehäuses 200" anders ausgebildet als beim zweiten Ausführungsbeispiel, nämlich demgegenüber vertauscht, so dass der Nehmeranschluss 202" als Aufnahmeteil geformt ist, während der Geberanschluss 204" als Steckteil ausgebildet ist. Hierbei steht die Aussparung 222" des Nehmeranschlusses 202" mit der Druckmittelkammer 208" über einen Durchgang 234" in dem in Fig. 14 linken Gehäuseteil 210" in Fluidverbindung.

Die zentrische, mit der Druckmittelkammer 208" über den Kanal 72" kommunizierende Durchgangsbohrung 214" im in Fig. 14 rechten Gehäuseteil 212" hingegen weist einen gestuften Bohrungsabschnitt 236" auf, in dem das im Wesentlichen stiftförmige Einsatzteil 68" eingesetzt ist. Im Ergebnis ist der gemäß insbesondere Fig. 15 wiederum am Außenumfang des Einsatzteils 68" als Nut ausgebildete Wendelabschnitt 168" des Kanals 72" nach radial außen von einer Innenumfangsfläche 64" des Bohrungsabschnitts 236" des Gehäuses 200" abgedeckt. Die Enden 238" des aus einem geeigneten Kunststoff spritzgeformten Einsatzteils 68" sind jeweils planparallel abgeflacht, um einen freien Durchgang zur Druckmittelkammer 208" bzw. zum in Fig. 14 rechten Ende der Durchgangsbohrung 214" zu gewährleisten. Das Einsatzteil 68" kann z.B. im Außendurchmesser bezüglich des Innendurchmessers an der Umfangswand 64" derart dimensioniert/gepasst sein, dass es durch Einpressen in der Durchgangsbohrung 214" befestigt wird. Querbohrungen mit sehr kleinem Querschnitt können vorgesehen sein (in Fig. 14 mit gestrichelten Linien angedeutet), um für eine bessere Entlüftung des Kanals 72" zur Druckmittelkammer 208" insbesondere beim Befüllen der Vorrichtung 70" mit Hydraulikflüssigkeit zu sorgen. Auch bei diesem Ausführungsbeispiel hat der Wendelabschnitt 168" des Kanals 72" einen - hier im Wesentlichen rechteckigen - Querschnitt, der kleiner ist als der minimale freie Querschnitt des Geberanschlusses 204" (im in Fig. 14 rechten Ende der Durchgangsbohrung 214").

Gemäß Fig. 14 sind die beiden Gehäuseteile 210", 212" ferner bei 240" mit komplementär ausgebildeten Ringstrukturen versehen, die formschlüssig ineinander greifen und an denen die beiden Gehäuseteile 210", 212" zur Ausbildung des Gehäuses 200' verschweißt oder verklebt sind. Sowohl das rechte Gehäuseteil 210" als auch das linke Gehäuseteil 212" ist mit einer Ringaussparung 242" bzw. 244" ausgebildet, die gemeinsam den Volumenaufnehmer 78" aufnehmen, so dass der Volumenaufnehmer 78" zwischen den zwei Gehäuseteilen 210", 212" eingespannt ist.

Bei dem Volumenaufnehmer 78" selbst handelt es sich um ein rohrförmiges Element aus einem elastischen Kunststoff, z.B. gespritztes Polyamid 66 ohne Glasfaserverstärkung, welches im etwas ballig ausgebildeten Gehäuse 200" die radial innere Druckmittelkammer 208" von der radial äußeren Luftkammer 196" trennt. Endseitige O-Ringe 246" zwischen dem Volumenaufnehmer 78" und dem jeweiligen Gehäuseteil 210", 212" dichten hierbei die Druckmittelkammer 208" gegenüber der Luftkammer 196" ab. Auch bei diesem Ausführungsbeispiel sind der Wendelabschnitt 168" des Kanals 72" und der Volumenaufnehmer 78" im Gehäuse 200" in einer einander im Wesentlichen umgebenden, koaxialen Lagebeziehung zueinander angeordnet, so dass das Gehäuse 200" relativ kurz baut, hier allerdings dergestalt, dass der Volumenaufnehmer 78" den Wendelabschnitt 168" des Kanals 72" wenigstens teilweise koaxial umgibt.

Für den Fachmann ist ersichtlich, dass die Volumenaufnahme eines derart ausgestalteten Volumenaufnehmers 78" den jeweiligen Einbau- und Funktionserfordernissen entsprechend leicht durch geeignete Wahl der Größen Werkstoff, Wanddicke, Durchmesser und/oder Länge des hohlzylindrischen Rohrabschnitts angepasst werden kann, um so etwa dem jeweiligen Betriebsdruck einer Betätigungsstrecke Rechnung zu tragen. Die Funktion bzw. Wirkungsweise der Vorrichtung 70" insgesamt wurde eingangs schon näher erläutert, so dass weitere Ausführungen hierzu an dieser Stelle entbehrlich erscheinen.

Auch zu dem dritten Ausführungsbeispiel wurden Versuche durchgeführt, deren Ergebnis in Fig. 16 beispielhaft illustriert ist. Die eigentliche Versuchsdurchführung entsprach derjenigen, welche weiter oben unter Bezugnahme auf die Fig. 10 schon beschrieben wurde. Im vorliegenden Fall kamen allerdings ein Nehmerzylinder mit einem effektiven Kolbenwirkdurchmesser von 19,05 mm und ein Geberzylinder mit einem effektiven Kolbenwirkdurchmesser von 15,87 mm zum Einsatz, die - analog der Fig. 23 - über eine ausgehend vom Nehmerzylinder aus (a) einem metallischen Kupplungsrohrabschnitt (Innendurchmesser: ca. 4,75 mm, Wandstärke: ca. 0,7 mm, Länge: ca. 300 mm), (b) einem elastomeren Kupplungsschlauchabschnitt (Innendurchmesser: ca. 6 mm, Außendurchmesser: ca. 12 mm, Länge: ca. 250 mm, eine Gewebelage) und (c) einem metallischen Kupplungsrohrabschnitt (Innendurchmesser: ca. 6 mm, Wandstärke: ca. 0,7 mm, Länge: ca. 400 mm) bestehende Druckleitungsanordnung hydraulisch miteinander verbunden waren. Die (abgewickelte) Länge des Wendelabschnitts 168" des Kanals 72" der Vorrichtung 70" zur Reduzierung von Druckpulsationen, welche zwischen dem Kupplungsschlauchabschnitt und dem geberzylinderseitigen Kupplungsrohrabschnitt angeordnet war, betrug wiederum ca. 200 mm, mit einem freien Querschnitt von ca. 3,6 mm². Als Volumenaufnehmer 78" kam ein Rohrabschnitt aus einem unverstärkten Polyamid 66 mit einer Gesamtlänge von ca. 40 mm, einem Außendurchmesser von ca. 18 mm und einem Innendurchmesser von ca. 15,4 mm zum Einsatz.

Das Schwingungsdämpfungsvermögen der getesteten Vorrichtung 70" zur Reduzierung von Druckpulsationen (Markierung mit nicht ausgefüllten Quadraten) im Vergleich zu der Anordnung ohne Vorrichtung zur Reduzierung von Druckpulsationen (Markierung mit Dreiecken) geht aus Fig. 16 deutlich hervor: Es kommt zu einer erheblichen Verkleinerung insbesondere des ersten Maximums (bei ca. 60 Hz), allerdings ohne Verlagerung im Frequenzbereich. Es gilt wiederum: Diese Ergebnisse sind nur beispielhaft zu verstehen; die Vorrichtung 70" zur Reduzierung von Druckpulsationen kann im Hinblick auf ihre Schwingungsdämpfungswirkung für die jeweilige Einbausituation wie hinsichtlich des Amplitudenverhältnisses bzw. des zu dämpfenden Frequenzbereichs gewünscht optimiert werden, sei es durch eine Änderung der Form/Abmessungen von Kanal 72" bzw. Volumenaufnehmer 78" und/oder die Wahl eines anderen Werkstoffs für den Volumenaufnehmer 78".

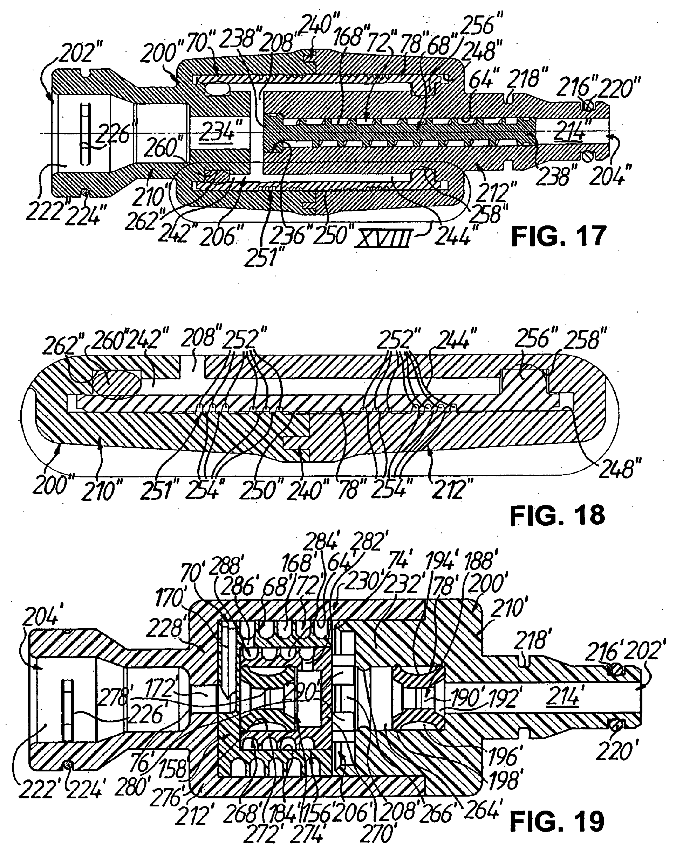

Die Fig. 17 und 18 zeigen eine Variante des dritten Ausführungsbeispiels gemäß den Fig. 13 bis 15, die nachfolgend nur insoweit beschrieben werden soll, als sie sich von dem dritten Ausführungsbeispiel unterscheidet.

Zunächst ist in Fig. 17 - verglichen mit Fig. 14 - das Einsatzteil 68" um 90° um seine Längsachse gedreht, so dass die freien Durchgänge zur Druckmittelkammer 208" bzw. zur Durchgangsbohrung 214" nicht sichtbar sind. Ferner ist das Gehäuse 200" nicht entsprechend Fig. 14 ballig ausgebildet, sondern so, dass die von den Gehäuseteilen 210", 212" gebildete, den Volumenaufnehmer 78" umgebende Innenumfangsfläche 248" des Gehäuses 200" im Wesentlichen zylindrisch ist.

Des Weiteren ist zwischen der Außenumfangsfläche 250" des zur Vereinfachung der Darstellung im unverformten Zustand gezeigten Volumenaufnehmers 78" und der Innenumfangsfläche 248" des Gehäuses 200" keine Luftkammer entsprechend Fig. 14 (dort Bezugszeichen 196") vorhanden. Vielmehr liegt der Volumenaufnehmer 78" mit seiner Außenumfangsfläche 250" an der Innenumfangsfläche 248" des Gehäuses 200" an. Dafür ist der im Wesentlichen schlauchförmige, hier aus einem gummielastischen Werkstoff wie EPDM (Elastomer auf Basis Ethylen-Propylen-DienKautschuk) bestehende Volumenaufnehmer 78" an seiner Außenumfangsfläche 250" profiliert (Profilierung 251"), so dass er nicht vollflächig an der Innenumfangsfläche 248" des Gehäuses 200" anliegt, sondern nur unter Belassung verhältnismäßig kleiner Hohlräume. Im dargestellten Ausführungsbeispiel (siehe Fig. 18) werden diese Hohlräume durch eine Mehrzahl von Ringnuten 252" gebildet, die durch umlaufende Stege 254" voneinander getrennt sind. Infolge dieser Ausgestaltung kann der Volumenaufnehmer 78" bei Druckbeaufschlagung mit dem Gehäuse 200", genauer dessen Innenumfangsfläche 248" verpresst werden, bei vergleichsweise geringer Volumenaufnahme in der Druckmittelkammer 208. Durch geeignete Wahl der Geometrie - Nut(en) mit gerundetem oder eckigem Querschnitt, andere Aussparungen zum Belassen von Noppen etc. - und/oder der Abmessungen - Tiefe, Breite und/oder Anzahl von Nuten bzw. Aussparungen etc. - der Profilierung 251" können den jeweiligen Einsatzerfordernissen entsprechend in definierter Weise die Volumenaufnahme der Vorrichtung 70" beschränkt und die Dämpfungseigenschaften der Vorrichtung 70" beeinflusst werden.

Wie weiterhin insbesondere in Fig. 18 zu erkennen ist, ist die Druckmittelkammer 208" durch Dichtmittel zwischen den Enden des Volumenaufnehmers 78" und dem Gehäuse 200" abgedichtet. Genauer gesagt ist im dargestellten Ausführungsbeispiel der Volumenaufnehmer 78" an seinem in Fig. 18 rechten Ende innenumfangsseitig einstückig mit einem Dichtwulst 256" ausgebildet, der in einer zugeordneten Ringnut 258" des Gehäuseteils 212" aufgenommen ist. Am in Fig. 18 linken Ende des Volumenaufnehmers 78" hingegen ist ein am im Wesentlichen zylindrischen Innenumfang des Volumenaufnehmers 78" anliegender O-Ring 260" vorgesehen, der seinerseits in einer zugeordneten Ringnut 262" des Gehäuseteils 210" aufgenommen ist. Prinzipiell können allerdings auch beide Enden des Volumenaufnehmers innenumfangsseitig mit jeweils einem Dichtwulst versehen sein oder an beiden Enden des Volumenaufnehmers am Innenumfang jeweils ein O-Ring vorgesehen sein.

Die Fig. 19 zeigt eine Vorrichtungsvariante zum zweiten Ausführungsbeispiel gemäß den Fig. 11 und 12, wie sie prinzipiell auch beim ersten Ausführungsbeispiel gemäß den Fig. 1 bis 10 zum Einsatz kommen kann und die im Folgenden nur insoweit beschrieben werden soll, als sie sich von den vorbeschriebenen Ausführungsbeispielen unterscheidet.

Gemäß Fig. 19 sind zunächst die Gehäuseteile 210', 212' des Gehäuses 200' gegenüber den Fig. 11 und 12 axial verlängert ausgebildet, um im Gehäuseteil 210' Platz für einen an die Durchgangsbohrung 214' anschließenden, dieser gegenüber durchmessergrößeren Aufnahmeraum 264' zur Aufnahme des Volumenaufnehmers 78' zu schaffen. Der Aufnahmeraum 264' schließt in Fig. 19 nach links mit einem nach radial innen vorstehenden Ringwulst 266' ab, der dafür sorgt, dass der Volumenaufnehmer 78' im Betrieb nicht aus dem Aufnahmeraum 264' hinauswandern kann.

Ferner ist in das im Gehäuseteil 212' angeordnete Einsatzteil 68' ein im Wesentlichen topfförmiger Inneneinsatz 268' eingesetzt, mit einem dem Gehäuseteil 210' zugewandten geschlossenen Boden 270' und einem stirnseitig am Boden 158' des Einsatzteils 68' anliegenden Mantelabschnitt 272'. Der Boden 270' und der Mantelabschnitt 272' des Inneneinsatzes 268' begrenzen zusammen mit dem Boden 158' des Einsatzteils 68' eine im Durchmesser einfach gestufte, geschlossene Kammer 274'. Im durchmessergrößeren Kammerabschnitt 276' der Kammer 274' kann in Ergänzung zum vorbeschriebenen Volumenaufnehmer 78' im Aufnahmeraum 264' ein weiterer Volumenaufnehmer 278' vorgesehen sein, wie dargestellt. Alternativ dazu kann aber auch nur der Volumenaufnehmer 78' im Aufnahmeraum 264' vorgesehen sein, während in der Kammer 274' kein Volumenaufnehmer angeordnet ist, oder der Volumenaufnehmer 278' in der Kammer 274' kann anstatt des Volumenaufnehmers 78' im Aufnahmeraum 264' vorgesehen sein.

Der durchmesserkleinere Kammerabschnitt 280' der Kammer 274' steht über eine Verbindungsbohrung 282' mit einem analog dem außenumfangsseitigen Wendelabschnitt 168' des Einsatzteils 68' am Außenumfang des Inneneinsatzes 268', genauer dessen Mantelabschnitts 272' ausgebildeten Wendelabschnitt 284' in Fluidverbindung. Der Wendelabschnitt 284' ist seinerseits über eine weitere Verbindungsbohrung 286' mit dem Wendelabschnitt 168' des Einsatzteils 68' hydraulisch verbunden. Im Ergebnis bilden die Verbindungsbohrung 286' im Einsatzteil 68', der zwischen Einsatzteil 68' und Inneneinsatz 268' ausgebildete Wendelabschnitt 284' und die Verbindungsbohrung 282' im Inneneinsatz 268' einen von der Leitungszusatzstrecke bzw. dem Kanal 72' abzweigenden, weiteren Streckenabschnitt 288' der Vorrichtung 70' zur Reduzierung von Druckpulsationen, welcher eine Länge aufweist, die ein Mehrfaches des direkten Abstands zwischen den Verbindungsbohrungen 282' und 286' beträgt, und der sackgassenartig in der geschlossenen Kammer 274' mit oder ohne Volumenaufnehmer 278' mündet. Dies stellt eine weitere Möglichkeit dar, die Vorrichtung 70' im Hinblick auf ihre Dämpfungseigenschaften den jeweiligen Einsatzerfordernissen entsprechend anzupassen.

Bliebe zu dieser Variante noch anzumerken, dass der Inneneinsatz 268' im Einsatzteil 68' mit Hilfe von ringsegmentförmigen Stegen 290' gehalten ist, die in einstückiger Ausbildung mit dem Gehäuseteil 210' oder dem Inneneinsatz 268' und gleichmäßig über dem Umfang verteilt dem Ringwulst 266' in Fig. 19 nach links folgen.

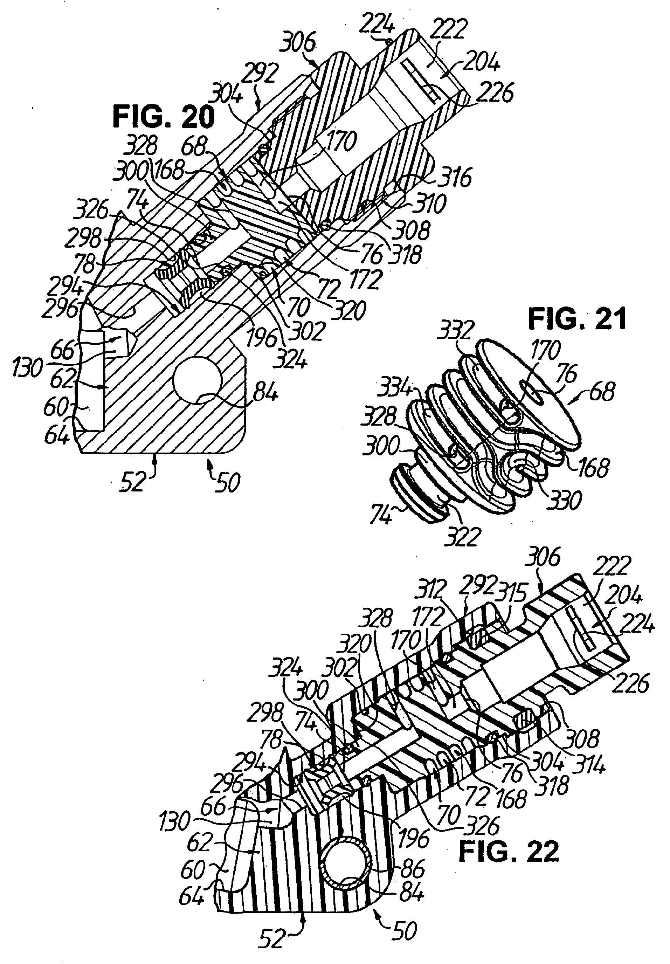

Die Fig. 20 bis 22 zeigen schließlich zwei nicht erfindungsgemäße Varianten, ähnlich dem oben unter Bezugnahme auf die Fig. 1 bis 10 beschriebenen ersten Ausführungsbeispiel, die nachfolgend nur insoweit beschrieben werden sollen, als sie sich vom ersten Ausführungsbeispiel unterscheiden.

Diesen Varianten ist gemein, dass die Vorrichtung 70 zur Reduzierung von Druckpulsationen wiederum im Zylindergehäuse 52 des Nehmerzylinders 50 integriert ist, diesmal allerdings nicht im Druckraum 60, sondern in einem vom Druckraum 60 räumlich getrennten bzw. beabstandeten Druckanschlussabschnitt 292 des Zylindergehäuses 52, der sich bei den dargestellten Varianten ausgehend von dem Gehäuseboden 62 des Zylindergehäuses 52 unter ca. 40° zur Gehäuselängsachse vom Gehäuseboden 62 weg erstreckt.

Hierbei ist der Druckanschlussabschnitt 292 ausgehend von seinem in den Fig. 20 und 22 rechten, oberen Ende mit einer Stufenbohrung 294 versehen, die letztendlich in der Druckanschlussbohrung 130 des Druckanschlusses 66 zum Druckraum 60 mündet. Genauer gesagt umfasst die Stufenbohrung 294 ausgehend von der Druckanschlussbohrung 130 eine Mehrzahl von Bohrungsabschnitten mit von Abschnitt zu Abschnitt zunehmendem Innendurchmesser, nämlich
- einen Verbindungsabschnitt 296 zur Druckanschlussbohrung 130,
- einen ersten Aufnahmeabschnitt 298 zur Aufnahme des Volumenaufnehmers 78 (Details zu Letzterem vgl. die Fig. 8 und 9 mit zugehöriger Beschreibung) und eines rohrförmigen Fortsatzes 300 des Einsatzteils 68,
- einen - ggf. nochmals geringfügig gestuften (siehe Fig. 22) - zweiten Aufnahmeabschnitt 302 für den Hauptteil des Einsatzteils 68 und ein/einen Steckende bzw. -abschnitt 304 eines Anschlussteils 306, mittels dessen das Einsatzteil 68 im Druckanschlussabschnitt 292 gehalten ist,
- einen Befestigungsabschnitt 308 zur Befestigung des Anschlussteils 306 im Druckanschlussabschnitt 292 - in Fig. 20 mit einem Innengewinde versehen, das mit einem Außengewinde 310 am Anschlussteil 306 zusammenwirkt; in Fig. 22 hingegen mit einer Ringnut 312 versehen, in der ein geschlitzter Kunststoffring 314 zur Ausbildung einer Schnappverbindung mit einer zugeordneten Ringnut 315 im Anschlussteil 306 eingesetzt ist - und
- ggf. eine Fügeschräge 316 (siehe Fig. 20) für das Anschlussteil 306.

Das Anschlussteil 306 selbst hat analog dem vorstehend unter Bezugnahme auf insbesondere die Fig. 12 beschriebenen zweiten Ausführungsbeispiel einen Geberanschluss 204 mit an sich bekannter Aufnahmegeometrie, umfassend die an der geberzylinderseitigen Öffnung 76 des Kanals 72 endende Aussparung 222, das Sicherungselement 224 und den Steckschlitz 226 hierfür. Ferner ist das/der Steckende bzw. -abschnitt 304 mit einer Ringnut zur Aufnahme eines O-Rings 318 versehen, der gegenüber dem zweiten Aufnahmeabschnitt 302 der Stufenbohrung 294 abdichtet.

Das an der zwischen dem ersten Aufnahmeabschnitt 298 und dem zweiten Aufnahmeabschnitt 302 der Stufenbohrung 294 gebildeten Ringschulter 320 anliegende Einsatzteil 68 weist am Außenumfang des Fortsatzes 300 ebenfalls eine Ringnut 322 (vgl. Fig. 21) auf, in der ein weiterer O-Ring 324 aufgenommen ist, der gegenüber dem ersten Aufnahmeabschnitt 298 der Stufenbohrung 294 abdichtet. Schließlich ist das Einsatzteil 68 ausgehend von dem freien Ende der Fortsatzes 300 mit einer Sackbohrung 326 versehen, die als Bestandteil des Kanals 72 an ihrem eine Ende die nehmerzylinderseitige Öffnung 74 bildet und an ihrem anderen Ende über eine ebenfalls zum Kanal 72 zählende, quer zum Einsatzteil 68 verlaufende Verbindungsbohrung 328 hydraulisch mit dem Wendelabschnitt 168 des Einsatzteils 68 verbunden ist.

Der Wendelabschnitt 168 des Einsatzteils 68 weist bei diesen Varianten gemäß Fig. 21 noch die Besonderheit auf, dass er bei 330 eine Wendelumkehr besitzt, die bewirkt, dass die bei einer Betätigung der hydraulischen Kupplungsbetätigung von der geberzylinderseitigen Öffnung 76 kommende Hydraulikflüssigkeit, die zunächst bezüglich der Längsachse des Einsatzteils 68 im Uhrzeigersinn durch den Wendelabschnitt 168 des Kanals 72 fließt, an der spitzkehrenartig ausgebildeten Wendelumkehr 330 ihre Bewegungsrichtung ändert und ab der Wendelumkehr 330 gegen den Uhrzeigersinn durch den Wendelabschnitt 168 fließt. Mit anderen Worten gesagt unterteilt die Wendelumkehr 330 den Wendelabschnitt 168 in einen rechtsgewindeartig verlaufenden Unterabschnitt 332 und einen linksgewindeartig verlaufenden Unterabschnitt 334. Hierdurch ergibt sich - verglichen mit dem Wendelabschnitt ohne Wendelumkehr - zum einen ein die Dämpfungswirkung der Vorrichtung 70 erhöhender, geringfügig größerer Durchflusswiderstand; zum anderen ist der axiale Bauraumbedarf des so ausgebildeten Wendelabschnitts 168 kleiner. Eine derartige Wendelumkehr kann natürlich auch bei den anderen Ausführungsbeispielen vorgesehen sein.

Im Übrigen unterscheiden sich die Varianten gemäß den Fig. 20 und 22 - abgesehen von dem unterschiedlichen Werkstoff für das Zylindergehäuse 52 (Leichtmetall in Fig. 20; Kunststoff in Fig. 22) - noch dahingehend, dass bei der Variante gemäß Fig. 22 das Einsatzteil 68 und das Anschlussteil 306 einstückig ausgebildet sind, vorzugsweise mittels Spritzgießen aus Kunststoff.

Es wird eine zwischen einen Druckraum eines Nehmerzylinders und einen Druckraum eines Geberzylinders eines hydraulischen Kraftübertragungssystems, insbesondere einer hydraulischen Kupplungsbetätigung für Kraftfahrzeuge schaltbare, für das Druckmittel stets offene Vorrichtung zur Reduzierung von Druckpulsationen offenbart. Diese Vorrichtung umfasst eine Leitungszusatzstrecke in Form eines einen Wendelabschnitt aufweisenden Kanals, der eine nehmerzylinderseitige Öffnung, eine geberzylinderseitige Öffnung und eine Kanallänge aufweist, die ein Mehrfaches des direkten Abstands zwischen den beiden Öffnungen beträgt, und einen Volumenaufnehmer, der unter Druck elastisch verformbar ist, wobei der Kanal und der Volumenaufnehmer derart in einem Gehäuse zu einer Baugruppe zusammengefasst sind, dass der Wendelabschnitt, der schraubengewindeartig verläuft, und der Volumenaufnehmer im Gehäuse in einer einander im Wesentlichen umgebenden, koaxialen Lagebeziehung zueinander angeordnet sind. Im Ergebnis wird eine Vorrichtung geschaffen, die nicht nur sehr gute Schwingungsdämpfungseigenschaften aufweist, sondern auch sehr kompakt baut und einen kostengünstigen Aufbau besitzt.

### BEZUGSZEICHENLISTE

- 10: hydraulische Kupplungsbetätigung
- 11: Pedalbock
- 12: Geberzylinder
- 14: Nehmerzylinder
- 16: Hydraulikleitung
- 18: erster Rohrabschnitt
- 20: Schlauchabschnitt
- 22: zweiter Rohrabschnitt
- 24: Ausgleichsbehälter
- 26: Kolbenstange
- 28: Kupplungspedal
- 30: Kolbenstange
- 32: Ausrückhebel
- 34: Ausrücklager
- 36: Ausrückmechanismus
- 38: Reibungskupplung
- 40: Kupplungsdruckplatte
- 42: Getriebewelle
- 43: Schwungscheibe
- 44: Kupplungsmitnehmerscheibe

- 50: Nehmerzylinder
- 52: Zylindergehäuse
- 54: Kolbenbaugruppe
- 56: Kolben
- 58: Kolbenstange
- 60: Druckraum
- 62: Gehäuseboden
- 64: Umfangswand
- 66: Druckanschluss
- 68: Einsatzteil
- 70: Vorrichtung zur Reduzierung von Druckpulsationen
- 72: Kanal
- 74: nehmerzylinderseitige Öffnung
- 76: geberzylinderseitige Öffnung
- 78: Volumenaufnehmer
- 80: Grundkörper
- 82: Befestigungsflansch
- 84: Befestigungsbohrung
- 86: Stahlbuchse
- 88: Radialnut
- 90: Faltenbalgabschnitt
- 92: Schutzkappe
- 94: Ringbund
- 96: Schraubendruckfeder
- 98: Stufenbohrung
- 100: Laufhülse
- 102: Hülsenabschnitt
- 104: Hülsenabschnitt
- 106: Ringabschnitt
- 108: Bohrungsabschnitt
- 110: Bohrungsabschnitt
- 112: Bohrungsabschnitt
- 114: Bohrungsabschnitt
- 116: Hinterschnitt
- 118: Sicherungselement
- 120: Ringschulter
- 122: Radialnut
- 124: O-Ring
- 126: Ringschulter
- 128: Stirnfläche
- 130: Druckanschlussbohrung
- 132: Radialnut
- 134: Nutring
- 136: Aussparung
- 138: Kugelkopf
- 140: Sicherungselement
- 142: Ende
- 144: Endstück
- 146: Endfläche
- 148: Ringbund
- 150: Ringaussparung
- 152: Befestigungsabschnitt
- 154: Axialnut
- 156: Mantelabschnitt
- 158: Boden
- 160: Fortsatz
- 162: Ringbund
- 164: Federarm
- 165: Widerlagerfläche
- 166: Schlitz
- 168: Wendelabschnitt
- 170: Verbindungsabschnitt
- 172: Endabschnitt
- 174: Fesselabschnitt
- 176: Fortsatz
- 178: Hohlzylinder
- 180: Ringwulst
- 182: Ringbund
- 184: Sackbohrung
- 186: Fügeabschnitt
- 188: Durchgangsbohrung
- 190: Zylinderabschnitt
- 192: Öffnungstrichter
- 194: Ringaussparung
- 196: Luftkammer
- 198: Dichtwulst
- 200: Gehäuse
- 202: Nehmeranschluss
- 204: Geberanschluss
- 206: Innenraum
- 208: Druckmittelkammer
- 210: Gehäuseteil
- 212: Gehäuseteil
- 214: Durchgangsbohrung
- 216: Radialnut
- 218: Radialnut
- 220: O-Ring
- 222: Aussparung
- 224: Sicherungselement
- 226: Steckschlitz
- 228: Boden
- 230: Mantelabschnitt
- 232: Fortsatz
- 234: Durchgang
- 236: Bohrungsabschnitt
- 238: Ende
- 240: Ringstruktur
- 242: Ringaussparung
- 244: Ringaussparung
- 246: O-Ring
- 248: Innenumfangsfläche
- 250: Außenumfangsfläche
- 251: Profilierung
- 252: Ringnut
- 254: Steg
- 256: Dichtwulst
- 258: Ringnut
- 260: O-Ring
- 262: Ringnut
- 264: Aufnahmeraum
- 266: Ringwulst
- 268: Inneneinsatz
- 270: Boden
- 272: Mantelabschnitt
- 274: Kammer
- 276: durchmessergrößerer Kammerabschnitt
- 278: (weiterer) Volumenaufnehmer
- 280: durchmesserkleinerer Kammerabschnitt
- 282: Verbindungsbohrung
- 284: Wendelabschnitt
- 286: Verbindungsbohrung
- 288: Streckenabschnitt
- 290: Steg
- 292: Druckanschlussabschnitt
- 294: Stufenbohrung
- 296: Verbindungsabschnitt
- 298: erster Aufnahmeabschnitt
- 300: Fortsatz
- 302: zweiter Aufnahmeabschnitt
- 304: Steckende bzw. -abschnitt
- 306: Anschlussteil
- 308: Befestigungsabschnitt
- 310: Außengewinde
- 312: Ringnut
- 314: Kunststoffring
- 315: Ringnut
- 316: Fügeschräge
- 318: O-Ring
- 320: Ringschulter
- 322: Ringnut
- 324: O-Ring
- 326: Sackbohrung
- 328: Verbindungsbohrung
- 330: Wendelumkehr
- 332: rechtsgewindeartig verlaufender Unterabschnitt
- 334: linksgewindeartig verlaufender Unterabschnitt

## Patentansprüche

1. Zwischen einen Druckraum (60) eines Nehmerzylinders (50) und einen Druckraum eines Geberzylinders eines hydraulischen Kraftübertragungssystems, insbesondere einer hydraulischen Kupplungsbetätigung für Kraftfahrzeuge schaltbare, für das Druckmittel stets offene Vorrichtung (70, 70', 70") zur Reduzierung von Druckpulsationen, mit
einer Leitungszusatzstrecke in Form eines einen Wendelabschnitt (168, 168', 168") aufweisenden Kanals (72, 72', 72"), der eine nehmerzylinderseitige Öffnung (74, 74', 74"), eine geberzylinderseitige Öffnung (76, 76', 76") und eine Kanallänge aufweist, die ein Mehrfaches des direkten Abstands zwischen den beiden Öffnungen (74, 76; 74', 76'; 74", 76") beträgt, und
einem Volumenaufnehmer (78, 78', 78"), der unter Druck elastisch verformbar ist,
**dadurch gekennzeichnet, dass** der Kanal (72, 72', 72") und der Volumenaufnehmer (78, 78', 78") derart in einem Gehäuse (52, 200', 200") zu einer Baugruppe zusammengefasst sind, dass der Wendelabschnitt (168, 168', 168"), der schraubengewindeartig verläuft, und der Volumenaufnehmer (78, 78', 78") im Gehäuse (52, 200', 200") in einer einander im Wesentlichen umgebenden, koaxialen Lagebeziehung zueinander angeordnet sind.

2. Vorrichtung (70, 70', 70") nach Anspruch 1, **dadurch gekennzeichnet, dass** der Volumenaufnehmer (78, 78', 78") dem die Leitungszusatzstrecke bildenden Kanal (72, 72', 72") in einer Richtung vom Nehmerzylinder (50) aus zum Geberzylinder hin gesehen hydraulisch vorgeschaltet ist.

3. Vorrichtung (70, 70', 70") nach Anspruch 1 oder 2, **dadurch gekennzeichnet, dass** in das Gehäuse (52, 200', 200") ein Einsatzteil (68, 68', 68") eingesetzt ist, welches zumindest teilweise zusammen mit dem Gehäuse (52, 200', 200'') den Kanal (72, 72', 72") begrenzt.

4. Vorrichtung (70, 70', 70") nach Anspruch 3, **dadurch gekennzeichnet, dass** der Wendelabschnitt (168, 168', 168") des Kanals (72, 72', 72") am Außenumfang des Einsatzteils (68, 68', 68") als Nut ausgebildet ist, die nach radial außen von einer Innenumfangsfläche (64, 64', 64") des Gehäuses (52, 200', 200") abgedeckt ist.

5. Vorrichtung (70, 70') nach wenigstens dem Anspruch 3, **dadurch gekennzeichnet, dass** das Einsatzteil (68, 68') im Wesentlichen topfförmig ausgebildet ist, mit einem Mantelabschnitt (156, 156') und einem Boden (158, 158').

6. Vorrichtung (70, 70') nach Anspruch 5, **dadurch gekennzeichnet, dass** der am Außenumfang des Mantelabschnitts (156, 156') des Einsatzteils (68, 68') ausgebildete Wendelabschnitt (168, 168') des Kanals (72, 72') über einen im Boden (158, 158') des Einsatzteils (68, 68') verlaufenden Verbindungsabschnitt (170, 170') des Kanals (72, 72') mit der geberzylinderseitigen Öffnung (76, 76') des Kanals (72, 72') kommuniziert.

7. Vorrichtung (70, 70') nach Anspruch 5 oder 6, **dadurch gekennzeichnet, dass** der Volumenaufnehmer (78, 78') am Innenumfang des Mantelabschnitts (156, 156') des Einsatzteils (68, 68') montiert ist.

8. Vorrichtung (70, 70') nach Anspruch 7, **dadurch gekennzeichnet, dass** es sich bei dem Volumenaufnehmer (78, 78') um ein gummielastisches, spulenförmiges Element handelt, mit einer Durchgangsbohrung (188, 188') und einer außenumfangsseitigen Ringaussparung (194, 194'), die zusammen mit dem Innenumfang des Mantelabschnitts (156, 156') des Einsatzteils (68, 68') eine ringförmige Luftkammer (196, 196') begrenzt.

9. Vorrichtung (70, 70') nach wenigstens dem Anspruch 1, **dadurch gekennzeichnet, dass** der Wendelabschnitt (168, 168') des Kanals (72, 72') den Volumenaufnehmer (78, 78') wenigstens teilweise koaxial umgibt.

10. Vorrichtung (70") nach einem der Ansprüche 1 bis 4, **dadurch gekennzeichnet, dass** es sich bei dem Volumenaufnehmer (78") um ein rohrförmiges Element aus einem elastischen Kunststoff handelt, welches im Gehäuse (200") eine radial innere Druckmittelkammer (208") von einer radial äußeren Luftkammer (196") trennt.

11. Vorrichtung (70") nach einem der Ansprüche 1 bis 4, **dadurch gekennzeichnet, dass** es sich bei dem Volumenaufnehmer (78") um ein im Wesentlichen schlauchförmiges Element aus einem gummielastischen Werkstoff handelt, welches im Gehäuse (200") eine radial innere Druckmittelkammer (208") begrenzt und mit seiner Außenumfangsfläche (250") an einer Innenumfangsfläche (248") des Gehäuses (200") anliegt, wobei die Außenumfangsfläche (250") des Volumenaufnehmers (78") mit einer Profilierung (251") zur Ausbildung von Hohlräumen zwischen Volumenaufnehmer (78") und Gehäuse (200") versehen ist.

12. Vorrichtung (70") nach wenigstens den Ansprüchen 3 und 10 oder wenigstens den Ansprüchen 3 und 11, **dadurch gekennzeichnet, dass** das im Wesentlichen stiftförmige Einsatzteil (68") in eine zentrische Bohrung (214") im Gehäuse (200") eingesetzt ist, die mit der Druckmittelkammer (208") kommuniziert.

13. Vorrichtung (70") nach wenigstens den Ansprüchen 10 und 12 oder wenigstens den Ansprüchen 11 und 12, **dadurch gekennzeichnet, dass** der Volumenaufnehmer (78") den Wendelabschnitt (168") des Kanals (72") wenigstens teilweise koaxial umgibt.

14. Vorrichtung (70', 70") nach einem der vorhergehenden Ansprüche, **dadurch gekennzeichnet, dass** es sich bei dem Gehäuse um ein separates Gehäuse (200', 200") handelt, welches mit einem Nehmeranschluss (202', 202") und einem Geberanschluss (204', 204") versehen in eine Hydraulikleitung zwischen Nehmerzylinder und Geberzylinder schaltbar ist, so dass der Nehmeranschluss (202', 202") und der Geberanschluss (204', 204") mit der im Innenraum (206', 206") des Gehäuses (200', 200") ausgebildeten Druckmittelkammer (208', 208") kommunizieren.

15. Vorrichtung (70', 70") nach den Ansprüchen 3 und 14, **dadurch gekennzeichnet, dass** das separate Gehäuse (200', 200") aus zwei Teilen (210', 212'; 210", 212") besteht, die aneinander befestigt den Innenraum (206', 206") begrenzen, in dem das Einsatzteil (68', 68") und der Volumenaufnehmer (78', 78") angeordnet sind.

16. Vorrichtung (70', 70") nach Anspruch 14 oder 15, **dadurch gekennzeichnet, dass** der Volumenaufnehmer (78', 78") im Innenraum (206', 206") des Gehäuses (200', 200") die Druckmittelkammer (208', 208") von einer Luftkammer (196', 196") trennt.

17. Vorrichtung (70') nach wenigstens dem Anspruch 15, **dadurch gekennzeichnet, dass** das Einsatzteil (68') axial zwischen den zwei Teilen (210', 212') des Gehäuses (200') eingespannt ist.

18. Vorrichtung (70") nach wenigstens den Ansprüchen 10 und 15 oder wenigstens den Ansprüchen 11 und 15, **dadurch gekennzeichnet, dass** das rohr- bzw. schlauchförmige Element (78") zwischen den zwei Teilen (210", 212") des Gehäuses (200") eingespannt ist.

19. Vorrichtung (70) nach einem der Ansprüche 1 bis 13, **dadurch gekennzeichnet, dass** es sich bei dem Gehäuse um ein Zylindergehäuse (52) des Nehmerzylinders (50) oder des Geberzylinders handelt, das einen Druckanschluss (66) aufweist.

20. Vorrichtung (70, 70', 70") nach wenigstens dem Anspruch 14 oder wenigstens dem Anspruch 19, **dadurch gekennzeichnet, dass** der Wendelabschnitt (168, 168', 168") des Kanals (72, 72', 72") einen Querschnitt aufweist, der kleiner oder gleich dem minimalen Querschnitt des Nehmer- und/oder des Geberanschlusses (202', 204'; 202", 204") bzw. des Druckanschlusses (66) ist.

21. Vorrichtung (70, 70', 70") nach wenigstens dem Anspruch 3, **dadurch gekennzeichnet, dass** das Einsatzteil (68, 68', 68") und vorzugsweise auch das Gehäuse (52, 200', 200") wenigstens teilweise aus einem Kunststoff spritzgegossen sind.

22. Vorrichtung (70') nach wenigstens dem Anspruch 1, **gekennzeichnet durch** einen zusätzlichen Streckenabschnitt (288') und eine geschlossene Kammer (274'), wobei der zusätzliche Streckenabschnitt (288') von dem Kanal (72') abzweigt und in der geschlossenen Kammer (274') mündet.

23. Vorrichtung (70') nach Anspruch 22, **dadurch gekennzeichnet, dass** in der geschlossenen Kammer (274') der Volumenaufnehmer oder ein zusätzlicher Volumenaufnehmer (278') der Vorrichtung (70') aufgenommen ist.

24. Vorrichtung (70) nach wenigstens dem Anspruch 19, **dadurch gekennzeichnet, dass** das Zylindergehäuse (52) einen Druckanschlussabschnitt (292) aufweist, der den Kanal (72) und den Volumenaufnehmer (78) enthält.

25. Vorrichtung (70) nach wenigstens den Ansprüchen 3 und 19, **dadurch gekennzeichnet, dass** das Einsatzteil (68) in den Druckanschlussabschnitt (292) eingesetzt und dort mittels eines Anschlussteils (306) gehalten ist.

26. Vorrichtung (70) nach Anspruch 25, **dadurch gekennzeichnet, dass** das Einsatzteil (68) und das Anschlussteil (306) einstückig ausgebildet sind.

27. Vorrichtung (70) nach wenigstens dem Anspruch 1, **dadurch gekennzeichnet, dass** der Wendelabschnitt (168) eine Wendelumkehr (330) aufweist, die den Wendelabschnitt (168) in einen rechtsgewindeartig verlaufenden Unterabschnitt (332) und einen linksgewindeartig verlaufenden Unterabschnitt (334) unterteilt.

## Claims

1. Device (70, 70', 70") for reducing pressure pulsations, the device being connectible between a pressure chamber (60) of a slave cylinder (50) and a pressure chamber of a master cylinder of a hydraulic force transmission system, particularly hydraulic clutch actuating means for motor vehicles, and constantly open to the pressure medium, comprising
an additional conduit in the form of a channel (72, 72', 72") having a helix section (168, 168', 168"), defining an opening (74, 74', 74") at the slave cylinder side and an opening (76, 76' 76") at the master cylinder side, and having a channel length equal to a multiple of the direct spacing of the two openings (74, 76; 74', 76'; 74", 76"), and
a volume receiving means (78, 78', 78") resiliently deformable under pressure,
**characterized in that** the channel (72, 72', 72") and the volume receiving means (78, 78', 78") are combined in a housing (52, 200', 200") to form a subassembly in such a way that the helix section (168, 168', 168"), which extends in the manner of a screw thread, and the volume receiving means (78, 78', 78") are arranged in the housing (52, 200', 200") in a mutual coaxial positional relationship with one substantially surrounding the other.

2. Device (70, 70', 70") according to claim 1, **characterized in that** the volume receiving means (78, 78', 78") is hydraulically connected upstream of the channel (72, 72', 72") forming the additional conduit as seen in a direction from the slave cylinder (50) to the master cylinder.

3. Device (70, 70', 70") according to claim 1 or 2, **characterized in that** an insert member (68, 68', 68") which at least partly together with the housing (52, 200', 200") bounds the channel (72, 72', 72") is inserted into the housing (52, 200', 200").

4. Device (70, 70', 70") according to claim 3, **characterized in that** the helix section (168, 168', 168") of the channel (72, 72', 72") is formed at the outer circumference of the insert member (68, 68', 68") as a groove, the groove being covered radially outwardly by an inner circumferential surface (64, 64', 64") of the housing (52, 200', 200").

5. Device (70, 70') according to at least claim 3, **characterized in that** the insert member (68, 68') is of substantially pot-shaped construction with a casing section (156, 156') and a base (158, 158').

6. Device (70, 70') according to claim 5, **characterized in that** the helix section (168, 168') of the channel (72, 72') formed at the outer circumference of the casing section (156, 156') of the insert member (68, 68') communicates with the opening (76, 76') of the channel (72, 72') at the master cylinder side by way of a connecting section (170, 170') of the channel (72, 72') extending in the base (158, 158') of the insert member (68, 68').

7. Device (70, 70') according to claim 5 or 6, **characterized in that** the volume receiving means (78, 78') is mounted at the inner circumference of the casing section (156, 156') of the insert member (68, 68').

8. Device (70, 70') according to claim 7, **characterized in that** the volume receiving means (78, 78') is a rubber-elastic bobbin-shaped element with a passage bore (188, 188') and at the outer circumferential side an annular recess (194, 194') bounding together with the inner circumference of the casing section (156, 156') of the insert member (68, 68') an annular air chamber (196, 196').

9. Device (70, 70') according to at least claim 1, **characterized in that** the helix section (168, 168') of the channel (72, 72') at least partly coaxially surrounds the volume receiving means (78, 78').

10. Device (70") according to any one of claims 1 to 4, **characterized in that** the volume receiving means (78") is a tubular element of a resilient plastics material separating a radially inner pressure medium chamber (208") from a radially outer air chamber (196") in the housing (200").

11. Device (70") according to any one of claims 1 to 4, **characterized in that** the volume receiving means (78") is a substantially hose-shaped element of a rubber-elastic material bounding a radially inner pressure chamber (208'') in the housing (200") and bearing by its outer circumferential surface (250") against an inner circumferential surface (248") of the housing (200"), the outer circumferential surface (250") of the volume receiving means (78") being provided with a profiling (251") for formation of cavities between the volume receiving means (78'') and the housing (200").

12. Device (70") according to at least claims 3 and 10 or at least claims 3 and 11, **characterized in that** the substantially pin-shaped insert member (68") is inserted into a central bore (214") in the housing (200"), the bore communicating with the pressure medium chamber (208").

13. Device (70") according to at least claims 10 and 12 or at least claims 11 and 12, **characterized in that** the volume receiving means (78") at least partly coaxially surrounds the helix section (168") of the channel (72'').

14. Device (70', 70") according to any one of the preceding claims, **characterized in that** the housing is a separate housing (200', 200") provided with a slave connection (202', 202") and a master connection (204', 204") and connectible into a hydraulic line between slave cylinder and master cylinder so that the slave connection (202', 202") and the master connection (204', 204") communicate with the pressure medium chamber (208, 208") formed in the interior space (206', 206'') of the housing (200', 200").

15. Device (70', 70") according to claims 3 and 14, **characterized in that** the separate housing (200', 200'') consists of two parts (210', 212'; 210", 212") which when fastened to one another bound the interior space (206', 206'') in which the insert member (68', 68") and the volume receiving means (78', 78") are arranged.

16. Device (70', 70") according to claim 14 or 15, **characterized in that** the volume receiving means (78', 78") in the interior space (206', 206") of the housing (200', 200") separates the pressure medium chamber (208', 208") from an air chamber (196', 196").

17. Device (70') according to at least claim 15, **characterized in that** the insert member (68') is axially clamped between the two parts (210', 212') of the housing (200').

18. Device (70") according to at least claims 10 and 15 or at least claims 11 and 15, **characterized in that** the tubular or hose-shaped element (78") is clamped between the two parts (210", 212") of the housing (200").

19. Device (70) according to any one of claims 1 to 13, **characterized in that** the housing is a cylinder housing (52) of the slave cylinder (50) or the master cylinder and has a pressure connection (66).

20. Device (70, 70', 70") according to at least claim 14 or at least claim 19, **characterized in that** the helix section (168, 168', 168") of the channel (72, 72', 72") has a cross-section smaller than or equal to the minimum cross-section of the slave connection and/or master connection (202', 204'; 202", 204") or of the pressure connection (66).

21. Device (70, 70', 70") according to at least claim 3, **characterized in that** the insert member (68, 68', 68") and preferably also the housing (52, 200', 200") are injectionmolded at least partly from a plastics material.

22. Device (70') according to at least claim 1, **characterized by** an additional path section (288') and a closed chamber (274'), wherein the additional path section (288') branches off the channel (72') and opens into the closed chamber (274').

23. Device (70') according to claim 22, **characterized in that** the volume receiving means or an additional volume receiving means (278') of the device (70') is received in the closed chamber (274').

24. Device (70) according to at least claim 19, **characterized in that** the cylinder housing (52) has a pressure connection section (292) containing the channel (72) and the volume receiving means (78).

25. Device (70) according to at least claims 3 and 19, **characterized in that** the insert member (68) is inserted into the pressure connection section (292) and held there by means of a connecting member (306).

26. Device (70) according to claim 25, **characterized in that** the insert member (68) and the connecting member (306) are constructed integrally.

27. Device (70) according to at least claim 1, **characterized in that** the helix section (168) has a helix reversal (330) dividing the helix section (168) into a subsection (332) extending in the manner of a right-hand thread and a subsection (334) extending in the manner of a left-hand thread.

## Revendications

1. Dispositif (70, 70', 70") destiné à réduire des pulsations de pression, qui peut être monté entre une chambre de pression (60) d'un cylindre récepteur (50) et une chambre de pression d'un maître-cylindre d'un système hydraulique de transmission de force, notamment d'un actionnement hydraulique d'embrayage pour véhicules automobiles, et qui est toujours ouvert pour l'agent de pression, le dispositif comprenant
un parcours supplémentaire de conduite sous la forme d'un canal (72, 72', 72"), qui comporte un tronçon en hélice (168, 168', 168"), et présente une ouverture côté cylindre récepteur (74, 74', 74"), une ouverture côté maître-cylindre (76, 76', 76"), et une longueur de canal égale à un multiple de la distance directe entre les deux ouvertures (74, 76 ; 74', 76'; 74", 76"), et un absorbeur de volume (78, 78', 78") qui peut se déformer de manière élastique sous l'effet de la pression,
**caractérisé en ce que** le canal (72, 72', 72") et l'absorbeur de volume (78, 78', 78") sont regroupés en un module de construction dans un boitier (52, 200', 200") de manière telle, que le tronçon en hélice (168, 168', 168"), qui s'étend à la manière d'un filetage de vis, et l'absorbeur de volume (78, 78', 78") soient agencés dans le boitier (52, 200', 200") dans une relation de positionnement réciproque selon laquelle ils s'entourent sensiblement de manière coaxiale.

2. Dispositif (70, 70', 70") selon la revendication 1, **caractérisé en ce que** l'absorbeur de volume (78, 78', 78") est placé en amont, sur le plan hydraulique, du canal (72, 72', 72") formant le parcours de conduite supplémentaire, dans une direction du cylindre récepteur (50) vers le maître-cylindre.

3. Dispositif (70, 70', 70") selon la revendication 1 ou la revendication 2, **caractérisé en ce que** dans le boitier (52, 200', 200") est inséré une pièce d'insert (68, 68', 68"), qui délimite au moins partiellement, en commun avec le boitier (52, 200', 200"), le canal (72, 72', 72").

4. Dispositif (70, 70', 70") selon la revendication 3, **caractérisé en ce que** le tronçon en hélice (168, 168', 168") du canal (72, 72', 72") est réalisé sur la périphérie extérieure de la pièce d'insert (68, 68', 68"), sous forme de rainure, qui est recouverte radialement à l'extérieur, par une surface périphérique intérieure (64, 64', 64") du boitier (52, 200', 200").

5. Dispositif (70, 70') selon au moins la revendication 3, **caractérisé en ce que** la pièce d'insert (68, 68') est d'une configuration sensiblement en forme de pot, présentant un tronçon d'enveloppe périphérique (156, 156') et un fond (158, 158').

6. Dispositif (70, 70') selon la revendication 5, **caractérisé en ce que** le tronçon en hélice (168, 168') du canal (72, 72'), formé sur la périphérie extérieure du tronçon d'enveloppe périphérique (156, 156') de la pièce d'insert (68, 68'), communique avec l'ouverture côté maître-cylindre (76, 76') du canal (72, 72'), par l'intermédiaire d'un tronçon de liaison (170, 170') du canal (72, 72'), qui s'étend dans le fond (158, 158') de la pièce d'insert (68, 68').

7. Dispositif (70, 70') selon la revendication 5 ou la revendication 6, **caractérisé en ce que** l'absorbeur de volume (78, 78') est monté à la périphérie intérieure du tronçon d'enveloppe périphérique (156, 156') de la pièce d'insert (68, 68').

8. Dispositif (70, 70') selon la revendication 7, **caractérisé en ce que** concernant l'absorbeur de volume (78, 78'), il s'agit d'un élément en forme de bobine, à élasticité du type caoutchouc, comprenant un alésage de passage (188, 188') et un évidement annulaire (194, 194') sur la périphérie extérieure, qui délimite avec la périphérie intérieure du tronçon d'enveloppe périphérique (156, 156') de la pièce d'insert (68, 68'), une chambre d'air (196, 196') de forme annulaire.

9. Dispositif (70, 70') selon au moins la revendication 1, **caractérisé en ce que** le tronçon en hélice (168, 168') du canal (72, 72') entoure au moins partiellement l'absorbeur de volume (78, 78') de manière coaxiale.

10. Dispositif (70") selon l'une des revendications 1 à 4, **caractérisé en ce que** concernant l'absorbeur de volume (78"), il s'agit d'un élément de forme tubulaire en une matière plastique élastique, qui, dans le boitier (200"), sépare une chambre d'agent de pression (208") radialement intérieure, d'une chambre d'air (196") radialement extérieure.

11. Dispositif (70") selon l'une des revendications 1 à 4, **caractérisé en ce que** concernant l'absorbeur de volume (78"), il s'agit d'un élément sensiblement sous forme de tuyau en un matériau présentant un élasticité du type caoutchouc, qui, dans le boitier (200"), délimite une chambre d'agent de pression (208") radialement intérieure, et s'appuie, avec sa surface périphérique extérieure (250"), contre une surface périphérique intérieure (248") du boitier (200"), la surface périphérique extérieure (250") de l'absorbeur de volume (78") étant pourvue d'un profilage (251") pour former des cavités entre l'absorbeur de volume (78") et le boitier (200").

12. Dispositif (70") selon au moins les revendications 3 et 10 ou au moins les revendications 3 et 11, **caractérisé en ce que** la pièce d'insert (68") sensiblement en forme de broche est insérée dans un alésage central (214") du boitier (200"), qui communique avec la chambre d'agent de pression (208").

13. Dispositif (70") selon au moins les revendications 10 et 12 ou au moins les revendications 11 et 12, **caractérisé en ce que** l'absorbeur de volume (78") entoure au moins partiellement, de manière coaxiale, le tronçon en hélice (168") du canal (72").

14. Dispositif (70', 70") selon l'une des revendications précédentes, **caractérisé en ce que** concernant le boitier, il s'agit d'un boitier séparé (200', 200"), qui, muni d'un raccord récepteur (202', 202") et d'un raccord de maître-cylindre (204', 204''), peut être monté dans une conduite hydraulique entre le cylindre récepteur et le maître-cylindre, de sorte que le raccord récepteur (202', 202") et le raccord de maître-cylindre (204', 204") communiquent avec la chambre d'agent de pression (208', 208") formée dans l'espace intérieur (206', 206") du boitier (200', 200").

15. Dispositif (70', 70") selon les revendications 3 et 14, **caractérisé en ce que** le boitier séparé (200', 200") est constitué de deux parties (210', 212'; 210", 212"), qui fixées l'une à l'autre, délimitent l'espace intérieur (206', 206") dans lequel sont agencés la pièce d'insert (68', 68") et l'absorbeur de volume (78', 78").

16. Dispositif (70', 70") selon la revendication 14 ou la revendication 15, **caractérisé en ce que** l'absorbeur de volume (78', 78") dans l'espace intérieur (206', 206") du boitier (200', 200") sépare la chambre d'agent de pression (208', 208") d'une chambre d'air (196', 196").

17. Dispositif (70') selon au moins la revendication 15, **caractérisé en ce que** la pièce d'insert (68') est enserrée axialement entre les deux parties (210', 212') du boitier (200').

18. Dispositif (70") selon au moins les revendications 10 et 15 ou au moins les revendications 11 et 15, **caractérisé en ce que** l'élément de forme tubulaire respectivement sous forme de tuyau (78") est enserré entre les deux parties (210", 212") du boitier (200").

19. Dispositif (70) selon l'une des revendications 1 à 13, **caractérisé en ce que** concernant le boitier, il s'agit d'un boitier de cylindre (52) du cylindre récepteur (50) ou du maître-cylindre, qui présente un raccord de pression (66).

20. Dispositif (70, 70', 70") selon au moins la revendication 14 ou au moins la revendication 19, **caractérisé en ce que** le tronçon en hélice (168, 168', 168") du canal (72, 72', 72") présente une section transversale, qui est inférieure ou égale à la section transversale minimale du raccord récepteur et/ou raccord de maître-cylindre (202', 204'; 202", 204") respectivement du raccord de pression (66).

21. Dispositif (70, 70', 70") selon au moins la revendication 3, **caractérisé en ce que** la pièce d'insert (68, 68', 68"), et de préférence également le boitier (52, 200', 200"), sont moulés par injection au moins en partie en une matière plastique.

22. Dispositif (70') selon au moins la revendication 1, **caractérisé par** un tronçon de parcours supplémentaire (288') et une chambre fermée (274'), le tronçon de parcours supplémentaire (288') étant dérivé du canal (72') et débouchant dans la chambre fermée (274').

23. Dispositif (70') selon la revendication 22, **caractérisé en ce que** dans la chambre fermée (274') est logé l'absorbeur de volume ou un absorbeur de volume supplémentaire (278') du dispositif (70').

24. Dispositif (70) selon au moins la revendication 19, **caractérisé en ce que** le boitier de cylindre (52) présente un tronçon de raccord de pression (292), qui renferme le canal (72) et l'absorbeur de volume (78).

25. Dispositif (70) selon au moins les revendications 3 et 19, **caractérisé en ce que** la pièce d'insert (68) est insérée dans le tronçon de raccord de pression (292) et y est maintenue au moyen d'une pièce de raccord (306).

26. Dispositif (70) selon la revendication 25, **caractérisé en ce que** la pièce d'insert (68) et la pièce de raccord (306) sont réalisées d'un seul tenant.

27. Dispositif (70) selon au moins la revendication 1, **caractérisé en ce que** le tronçon en hélice (168) présente une inversion d'hélice (330), qui subdivise le tronçon en hélice (168) en un sous-tronçon (332) s'étendant à la manière d'un filetage à droite, et un sous-tronçon (334) s'étendant à la manière d'un filetage à gauche.
